# EUROPEAN PATENT APPLICATION

(11) **EP 4 691 759 A1**
(43) Date of publication of application: **11.02.2026**
(21) Application number: 24792741.1
(22) Date of filing: 18.04.2024
(51) Int. Cl.: B32B 9/00, B32B 27/32, B65D 65/40

(54) **BARRIER FILM, LAYERED BODY, PACKAGING CONTAINER, AND PACKAGING PRODUCT**

(30) Priority: 20.04.2023 JP 2023069365; 24.04.2023 JP 2023070814
(71) Applicant: Toppan Holdings Inc., Tokyo 110-0016 (JP)
(72) Inventor: FUKUGAMI Miki, Tokyo 110-0016 (JP); YAMADA Mikinori, Tokyo 110-0016 (JP); MAEDA Masaki, Tokyo 110-0016 (JP)
(74) Representative: Hoffmann Eitle
(86) International application number: PCT/JP2024/015459
(87) International publication number: WO 2024/219469

(57) **Abstract**

A barrier film includes a base layer containing a polypropylene resin, an anchor coat layer, and an inorganic oxide layer, in this order. The base layer has a contact layer in contact with the anchor coat layer. When softening temperatures of the anchor coat layer and the contact layer are measured by local thermal analysis, a softening temperature T1 of the contact layer is lower than a softening temperature T2 of the anchor coat layer.

## Description

### Technical Field

The present disclosure relates to a barrier film, a laminate, a packaging container, and a packaging product.

### Background Art

Barrier film has been widely used mainly as packaging materials typically for foods or medical drugs, subjected to heat sterilization treatment such as boiling or retort processing. Some barrier films used for such packaging material have a base layer, an anchor coat layer, and an inorganic oxide layer. The base layer used herein may contain a polypropylene resin, from the viewpoints of transparency, mechanical strength, and heat resistance.

Patent Literature 1 below discloses a transparent laminate having a transparent primer layer formed of a mixture of an acrylic resin and an isocyanate resin, and a thin film layer formed of an inorganic compound, sequentially layered on a base formed of a stretched polypropylene film. Patent Literature 1 below also discloses a heat-sealable laminate obtained by laminating a gas barrier film and a heat-sealable resin layer (sealant layer), on a thin film layer composed of an inorganic compound, of the transparent laminate.

### Citation List

### Patent Literature

Patent Literature 1: Japanese Unexamined Patent Publication No. H10-264292

### Summary of Invention

### Technical Problem

The transparent laminate described in Patent Literature 1, however, has room for improvement in terms of adhesion to the sealant layer after heat sterilization treatment.

It is therefore an object of the present disclosure to provide a barrier film that has excellent lamination strength with another film even after heat sterilization treatment; a laminate; a packaging container; and a packaging product.

### Solution to Problem

The inventors conducted investigations to solve the aforementioned problem. If the barrier film, having the base layer that contains a polypropylene resin, the anchor coat layer and the inorganic oxide layer, were heat-sterilized after laminated with another film such as a sealant layer, the base layer would typically cause shrinkage. The inventors considered that this case is attributable to shrinkage stress which is generated in the base layer and is transmitted through the anchor coat layer to reach the inorganic oxide layer, thus causing distortion between the inorganic oxide layer and another film. The present inventors therefore went into further investigations while focusing on the aforementioned point, and found that the problem may be solved by the present disclosure described below.

That is, one aspect of the present disclosure provides a barrier film including a base layer containing a polypropylene resin, an anchor coat layer, and an inorganic oxide layer, in this order, the base layer including a contact layer in contact with the anchor coat layer, wherein, when softening temperatures of the anchor coat layer and the contact layer are measured by local thermal analysis, a softening temperature T1 of the contact layer is lower than a softening temperature T2 of the anchor coat layer.

The aforementioned barrier film can exhibit excellent lamination strength with another film, even after heat sterilization treatment.

The present inventors presume the reason why the aforementioned effect is obtainable, as follows.

That is, if the barrier film, having the base layer that contains a polypropylene resin, the anchor coat layer and the inorganic oxide layer, were heat-sterilized after being laminated with another film such as a sealant layer, the base layer would typically cause shrinkage. The shrinkage stress generated in the base layer is transmitted through the anchor coat layer to reach the inorganic oxide layer. Now, in the barrier film of the present disclosure, the base layer includes a contact layer having the softening temperature T1 lower than the softening temperature T2 of the anchor coat layer, thus being made more flexible than the anchor coat layer, so that the shrinkage stress applied from the base layer to the anchor coat layer can be moderated by the contact layer. This makes distortion between the inorganic oxide layer and another film less likely to occur, thus suppressing decrease in adhesion between another film and the barrier film. The present inventors presume that the aforementioned barrier film can exhibit excellent lamination strength with another film, even after heat sterilization treatment.

In this barrier film, the anchor coat layer preferably has the softening temperature T2 in a range of 140°C or higher and 195°C or lower.

When the softening temperature T2 is 140°C or higher, the anchor coat layer can have enhanced heat resistance, will be less likely to deform under high temperatures during heat sterilization treatment such as retort processing, and can reduce damage to the inorganic oxide layer. The barrier film can, therefore, further improve the oxygen permeability even after heat sterilization treatment. Furthermore, when the softening temperature T2 is 195°C or lower, the anchor coat layer will not be excessively hard, will be more durable against deformation of the barrier film during the heat sterilization treatment such as retort processing, and the inorganic oxide layer will be less likely to be damaged.

In this barrier film, the base layer may further include a core layer adjacent to the contact layer, on a side opposite to the anchor coat layer, the contact layer may be a skin layer, and the softening temperature T1 of the contact layer may be lower than a softening temperature T3 of the core layer.

In the barrier film, T2 - T1 preferably is equal to or less than 70°C.

When the T2 - T1 is 70°C or below, the difference in flexibility between the contact layer and the anchor coat layer is less likely to become large, and the adhesion between the contact layer and the anchor coat layer is less likely to decrease.

In the barrier film, the contact layer may contain a copolymer of propylene and an α-olefin.

This makes it easier to increase the difference between the softening temperature T1 of the skin layer and the softening temperature T2 of the anchor coat layer.

In the barrier film, the anchor coat layer may contain a polyurethane resin.

When the anchor coat layer contains a polyurethane resin, the barrier film can have high heat resistance and high durability against heat sterilization treatment.

In the barrier film, the anchor coat layer may have a thickness of 0.05 to 2 µm.

The barrier film in this case will be able to further suppress the deterioration of the water vapor barrier property when subjected to external force such as stretching. In addition, the barrier film will have further improved flexibility, and further improved oxygen gas barrier property after being abused.

Another aspect of the present disclosure is to provide a laminate having the aforementioned barrier film and a sealant layer.

According to the laminate, since the barrier film has excellent lamination strength with the sealant layer as another film even after heat sterilization treatment, it is possible to suppress delamination between layers even after heat sterilization treatment. That is, according to the laminate, it is possible to have excellent interlayer adhesion, even after heat sterilization treatment.

The laminate may further have a second base layer on a surface of the barrier film, on a side opposite to the sealant layer, and the second base layer may contain a polyolefin resin.

The laminate may have the second base layer, the barrier film, and the sealant layer, in this order; wherein the base layer of the barrier film may be a first base layer, each of the second base layer, the first base layer, and the sealant layer may contain a polypropylene film; and in an X-ray diffraction pattern acquired by X-ray diffraction measurement for the second base layer, a peak intensity ratio A, which is a ratio of peak intensity I₁₁₀ of (110) plane to peak intensity I₀₄₀ of (040) plane, is 0.75 or more.

According to such laminate, it is possible to have excellent recyclability, and excellent interlayer adhesion even after heat sterilization treatment such as retort processing.

Among the aforementioned effects, the reason why excellent interlayer adhesion is exhibited even after heat sterilization treatment, although not completely clarified, is presumably as follows.

That is, when the peak intensity ratio A is 0.75 or more, the crystallinity of the second substrate layer is reduced, thereby imparting sufficient flexibility to the second base layer. Hence, even if the laminate is largely deformed and the first base layer is largely deformed accordingly, the second base layer will be easily conformable to the deformation of the first base layer, by virtue of its sufficient flexibility. This makes it possible to reduce shear stress between the second base layer and the first base layer. It is also possible to reduce the shear stress between the first base layer and the sealant layer by reducing the shear stress between the second base layer and the first base layer, which reduces strain generated in the first base layer. It is therefore considered that the laminate can exhibit excellent interlayer adhesion, even after being subjected to the heat sterilization treatment.

In the laminate, the second base layer may be an unstretched film, and the first base layer may be a stretched film.

The laminate may have the inorganic oxide layer and the gas barrier layer in at least one of between the first base layer and the second base layer, and between the first base layer and the sealant layer.

In this case, the gas barrier property of the gas barrier laminate may further be improved.

The laminate may further have the inorganic oxide layer and the gas barrier layer, between the first base layer and the second base layer.

The laminate in this case can have more excellent interlayer adhesion, even after heat sterilization treatment, as compared with the case where the inorganic oxide layer and the gas barrier layer are provided between the first base layer and the sealant layer.

In the laminate, the inorganic oxide layer may be a vapor-deposited layer, and the vapor-deposited layer may contain at least one of aluminum oxide and silicon oxide.

The laminate in this case can improve resistance to various types of sterilization.

In the laminate, the gas barrier layer may be a layer formed from a coating liquid that contains a silicon compound and a water-soluble polymer, the silicon compound may contain at least one of a first silicon compound and a second silicon compound, the first silicon compound may contain at least one of a silicon alkoxide represented by formula (1) below and a hydrolysate thereof, and the second silicon compound may contain at least one of a silane coupling agent represented by formula (2) below and a hydrolysate thereof.

Si(OR¹)₄ ··· (1)

(In formula (1), OR¹ represents a hydrolyzable group.)

(R²Si(OR³)₃)ₙ ··· (2)

(In formula (2), OR³ represents a hydrolyzable group, and R² represents a monovalent organic group. n is an integer greater than or equal to 1.)

The interlayer adhesion of the laminate can be further improved in this case.

The laminate may have an oxygen permeability, at 30°C and 70% RH, of 200 cc/m²·day·atm or less.

According to this laminate, compared with a case in which the oxygen permeability at 30°C and 70% RH exceeds 200 cc/m²·day·atm, when a packaging container is produced using the laminate 100 and a packaged product is produced by accommodating contents in the packaging container, deterioration of the contents due to oxygen can be effectively suppressed.

In the laminate, the anchor coat layer may contain an organic polymer, and the organic polymer may contain at least one of polyacrylic resin, polyol-based resin, polyurethane-based resin, polyamide-based resin, and reaction product of these resins.

The anchor coat layer may have a thickness of 0.01 to 1 µm.

In this case, the anchor coat layer will have an improved surface smoothness over the surface of the first base layer, as compared with the case where the anchor coat layer has a thickness of less than 0.01 µm, thus making the thickness of the vapor-deposited layer more uniform, and further improving the oxygen barrier property. Hence, the oxygen barrier property of the laminate can be further improved. Moreover, as compared with a case where the thickness of the anchor coat layer exceeds 1 µm, the laminate will have further improved flexibility, and further improved oxygen gas barrier property after abuse.

Yet another aspect of the present disclosure is to provide a packaging container formed by using the aforementioned laminate.

Such packaging container can suppress delamination even after heat sterilization treatment, since the barrier film keeps excellent lamination strength with the sealant layer as another film, even after heat sterilization treatment, and since the laminate can therefore keep excellent interlayer adhesion even after heat sterilization treatment.

The packaging container is obtained by using the aforementioned laminate. The laminate will be highly recyclable, and will have more excellent interlayer adhesion even after heat sterilization treatment, if the laminate has the second base layer, the barrier film and the sealant layer arranged in this order; the base layer of the barrier film is the first base layer; each of the second base layer, the first base layer and the sealant layer contains a polypropylene film; and the peak strength ratio A is 0.75 or more. Hence the laminate will also be able to further suppress delamination, even after the packaging product having contents enclosed in the packaging container is sterilized under heating. After the contents have been taken out from the packaging product, the packaging container is highly recyclable.

Yet another aspect of the present disclosure provides a packaging product that includes a packaging container; and contents enclosed in the packaging container, wherein the packaging container is the aforementioned packaging container.

Such packaging product can suppress delamination even after heat sterilization treatment, since the barrier film has excellent lamination strength with the sealant layer as another film, even after heat sterilization treatment.

The packaging product has the packaging container obtained by using the aforementioned laminate. The laminate will be highly recyclable, and will have more excellent interlayer adhesion even after heat sterilization treatment, if the laminate has the second base layer, the barrier film and the sealant layer arranged in this order; the base layer of the barrier film is the first base layer; each of the second base layer, the first base layer and the sealant layer contains a polypropylene film; and the peak strength ratio A is 0.75 or more. Hence, delamination in the gas barrier laminate can be also suppressed even after heat sterilization treatment. The packaging container, left after the contents were taken out of the packaging product, will be highly recyclable.

### Advantageous Effects of Invention

The present disclosure can provide a barrier film that has excellent lamination strength with another film even after heat sterilization treatment; a laminate; a packaging container; and a packaging product.

### Brief Description of Drawings

FIG. 1 is a schematic cross-sectional view illustrating one embodiment of a barrier film of the present disclosure.
FIG. 2 is a schematic cross-sectional view illustrating a first embodiment of the laminate of the present disclosure.
FIG. 3 is a schematic cross-sectional view illustrating a second embodiment of the laminate of the present disclosure.
FIG. 4 is a schematic cross-sectional view illustrating a first embodiment of a packaging product of the present disclosure.
FIG. 5 is a schematic cross-sectional view illustrating a third embodiment of the laminate of the present disclosure.
FIG. 6 is a schematic cross-sectional view illustrating a fourth embodiment of the laminate of the present disclosure.
FIG. 7 is a schematic cross-sectional view illustrating a second embodiment of a packaging product of the present disclosure.

### Description of Embodiments

Hereinafter, embodiments of the present disclosure will be detailed while occasionally referring to the attached drawings. The present disclosure is, however, not limited to the embodiments below.

### <Barrier Film>

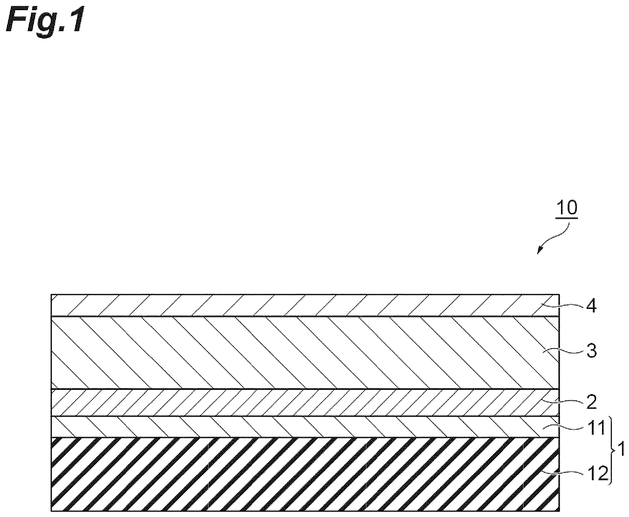

First, one embodiment of a barrier film of the present disclosure will be described, while referring to FIG. 1. FIG. 1 is a schematic cross-sectional view illustrating one embodiment of a barrier film, as one aspect of the present disclosure. As illustrated in FIG. 1, a barrier film 10 according to this embodiment has a base layer 1 that contains a polypropylene resin, an anchor coat layer 2, an inorganic oxide layer 3, and a gas barrier layer 4, arranged in this order.

The base layer 1 may be composed of a multilayer film that includes a skin layer 11 and a core layer 12 as illustrated in FIG. 1, or may consist only of the skin layer 11. The skin layer 11 is a contact layer arranged in contact with the anchor coat layer 2.

In the barrier film 10, when the softening temperatures of the anchor coat layer 2 and the skin layer 11 are measured by local thermal analysis (LTA), a softening temperature T1 of the skin layer 11 is lower than a softening temperature T2 of the anchor coat layer 2.

The barrier film 10 has excellent lamination strength with another film such as a sealant layer, even after heat sterilization is performed with another film attached to the gas barrier layer 4.

Hereinafter, the base layer 1, the anchor coat layer 2, the inorganic oxide layer 3, and the gas barrier layer 4 will be described in detail.

### [Base Layer]

The base layer 1 is a film (base film) which serves as a support, and has the skin layer 11 and the core layer 12.

### (Core Layer)

The core layer 12 contains a polypropylene resin.

Examples of the polypropylene resin include homopolypropylene resin which is a homopolymer of propylene, random copolymer of propylene and α-olefin, or mixture thereof, among which the homopolypropylene resin, being a homopolymer of propylene, is preferred from the viewpoint of improving heat resistance.

The polypropylene resin used for the core layer 12 may be a resin polymerized from fossil fuel, may be a recycled resin, or may be a resin obtained by polymerizing raw material derived from plant or other biomass. These resins may be used alone, or by mixing the resin polymerized from fossil fuel, with the recycled resin, or with the resin obtained by polymerizing raw material derived from plant or other biomass.

The polypropylene resin may be an amorphous polypropylene resin, or a crystalline polypropylene resin.

Content of the polypropylene resin, relative to the total mass of the core layer 12, may be 90% by mass or more, 95% by mass or more, or 99% by mass or more. The content of the polypropylene resin, relative to the total mass of the core layer 12, may substantially be 100% by mass. That is, the core layer 12 may be a layer composed substantially solely of polypropylene resin.

The core layer 12 may contain, for example, organic additives including antioxidant, stabilizer, lubricant, or antistatic agent; or may contain inorganic additives such as silica, zeolite, hydrotalcite, silicon particles, or Syloid, as necessary.

The thickness (total thickness) of the core layer 12 is not particularly limited, but may be, for example, 3 µm or more and 200 µm or less, 6 µm or more and 50 µm or less, or 10 µm or more and 30 µm or less. When the thickness of the core layer 12 is 3 µm or more, wrinkles and the like are less likely to occur during the production of the barrier film 10 and the use of the barrier film 10 for a packaging film, which makes handling easier. When the thickness of the core layer 12 is 200 µm or less, the conveyability during roll-to-roll process is further improved.

### (Skin Layer)

The skin layer 11 contained in the base layer 1 is a contact layer in contact with the anchor coat layer 2, and is interposed between the core layer 12 and the anchor coat layer 2.

The skin layer 11 contains a polypropylene resin.

The polypropylene resin used herein may be a copolymer of propylene and other monomer. Another monomer usable herein for the copolymer may be, for example, an α-olefin such as ethylene, 1-butene, or 1-hexene.

If another monomer is α-olefin, the skin layer 11 will contain the copolymer of propylene and α-olefin. This makes it easier to widen the difference between the softening temperature T1 of the skin layer 11 and the softening temperature T2 of the anchor coat layer 2.

The copolymer may be a random copolymer.

The copolymer used for the skin layer 11 may be a resin polymerized from fossil fuel, may be a recycled resin, or may be a resin obtained by polymerizing raw material derived from plant or other biomass. Each of these resins may be used alone, or by mixing a resin polymerized from fossil fuel with a recycled resin or a resin obtained by polymerizing a raw material derived from plant or other biomass.

Content of the propylene unit in the copolymer, relative to the total amount of monomer units, may be 80 mol% or more, 90 mol% or more, 95 mol% or more, or 96 mol% or more; or 99.7 mol% or less, 99.5 mol% or less, 99 mol% or less, or 98 mol% or less.

Content of the polypropylene resin, relative to the total mass of the skin layer 11, may be 90% by mass or more, 95% by mass or more, or 99% by mass or more. The content of the polypropylene resin, relative to the total mass of the skin layer 11, may substantially be 100% by mass. That is, the skin layer 11 may be a layer composed substantially solely of polypropylene resin.

The skin layer 11 may contain, for example, organic additives including antioxidant, stabilizer, lubricant, or antistatic agent; or may contain inorganic additives such as silica, zeolite, hydrotalcite, silicon particles, or Syloid, as necessary.

The softening temperature T1 of the skin layer 11 is lower than the softening temperature T2 of the anchor coat layer 2. With the skin layer 11 provided to the base layer 1, the barrier film 10 can exhibit excellent lamination strength with another film, even after heat sterilization treatment.

In the barrier film 10, T2 -T1 is preferably 70°C or less, although not particularly limited thereto as long as it is higher than 0°C.

When T2 - T1 is 70°C or less, the difference in flexibility between the skin layer 11 and the anchor coat layer 2 is less likely to become large, and the adhesion between the skin layer 11 and the anchor coat layer 2 is less likely to decrease.

T2 - T1 is preferably 68°C or less, and more preferably 60°C or less.

Meanwhile, T2 - T1 is preferably 1°C or more, and more preferably 2°C or more. When T2 - T1 is 3°C or more, the effect of imparting flexibility to the skin layer 11 is enhanced, which makes it possible to alleviate the stress applied to the anchor coat layer 2 due to the shrinkage of the base layer 1 after heat sterilization treatment, and also to alleviate the stress applied to the inorganic oxide layer 3. That is, the difference of strain between the base layer 1 and the anchor coat layer 2 may be effectively bridged. This can suppress the inorganic oxide layer 3 from being damaged, and can suppress deterioration of the barrier property of the inorganic oxide layer 3.

The softening temperature T1 of the skin layer 11 is preferably 115°C or higher and 170°C or lower, although not particularly limited as long as it is lower than the softening temperature T2 of the anchor coat layer 2. When the softening temperature T1 is 115°C or higher, the skin layer 11 will not excessively lower its heat resistance, will be less likely to soften during the heat sterilization treatment, and the decrease in adhesion to the anchor coat layer 2 or the core layer 12 and the deterioration of the barrier property will be less likely to occur. Furthermore, when the softening temperature T1 is 170°C or lower, degradation of the flexibility of the skin layer 11 can be suppressed, and the adhesion strength between the skin layer 11 and the core layer 12 can be further enhanced.

The softening temperature T1 may be 120°C or higher, 125°C or higher, or 130°C or higher from the viewpoint of adding heat resistance to the skin layer 11. The softening temperature T1 may be 165°C or lower, or 160°C or lower, from the viewpoint of imparting flexibility to the skin layer 11.

Note the skin layer 11 may demonstrate only the softening temperature T1, or may demonstrate one or more additional softening temperatures higher than the softening temperature T1. If the skin layer 11 demonstrates a plurality of softening temperatures, the softening temperature T1 is defined by the lowest one of them.

The softening temperature T1 of the skin layer 11 may be lower than the softening temperature T3 of the core layer 12, or may be equal to or higher than the softening temperature T3 of the core layer 12. If the softening temperature T1 of the skin layer 11 is lower than the softening temperature T3 of the core layer 12, stress transmitted from the core layer 12 to the anchor coat layer 2 tends to increase. It is, therefore, particularly useful to set the softening temperature T1 of the skin layer 11 lower than the softening temperature T2 of the anchor coat layer 2. T3 - T1 in this case may be 20°C or more, and may be 25°C or more. T3 - T1 may be 80°C or less, and may be 75°C or less.

The thickness (total thickness) of the skin layer 11 may typically be, but not particularly limited to, 0.1 µm or more and 5 µm or less, 0.2 µm or more and 3 µm or less, or, 0.3 µm or more and 2 µm or less.

The base layer 1 may be formed typically by co-extruding a resin for forming the core layer 12 with a resin for forming the skin layer 11 into a sheet, optionally followed by stretching for uniaxial or biaxial orientation. The skin layer 11 may be formed on only one face, or on both faces of the core layer 12.

### [Anchor Coat Layer]

The anchor coat layer 2 is a layer for further improving adhesion between the base layer 1 and the inorganic oxide layer 3, and is provided between the base layer 1 and the inorganic oxide layer 3.

Material constituting the anchor coat layer 2 is not particularly limited as long as it can improve the adhesion between the base layer 1 and the inorganic oxide layer 3, and, for example, a material that contains a reaction product of a polyol compound containing a (meth)acrylic resin and an isocyanate compound may be used. Note in the following description, "(meth)acrylic resin" means at least one of "acrylic resin", and "methacrylic resin" corresponded thereto.

Examples of the (meth)acrylic resin include (meth)acrylic polymer obtained by polymerizing polymerizable monomers that contain (meth)acrylic monomers. The (meth)acrylic polymer may be a homopolymer of (meth)acrylic monomer, or may be a copolymer of (meth)acrylic monomer and polymerizable monomer other than the (meth)acrylic monomer. The (meth)acrylic resin may be any resin thermally crosslinkable by urethane curing, epoxy curing or the like. The (meth)acrylic resin may be a polyol having two or more hydroxy groups in one molecule, from the viewpoint of reactivity with an isocyanate compound used as a curing agent described later, and may particularly be a (meth)acrylic polyol.

The (meth)acrylic polyol may be a (meth)acrylic copolymer obtained by copolymerizing a hydrocarbon-based (meth)acrylate and a hydroxy group-containing monomer; or may be a (meth)acrylic copolymer obtained by copolymerizing a hydrocarbon-based (meth)acrylate, a hydroxy group-containing monomer, and a monomer component other than these components (other monomer component). The (meth)acrylic polyol that contains a plurality of hydroxy groups is obtainable by copolymerizing the hydroxy group-containing monomer, with at least one of the hydrocarbon-based (meth)acrylate and the other monomer component.

The anchor coat layer 2 may contain a curing agent. The curing agent may be an isocyanate-based compound having two or more NCO groups in the molecule, from the viewpoint of high reactivity with the (meth)acrylic resin.

The isocyanate compound may be a monomeric isocyanate. Examples of the monomeric isocyanate include aromatic isocyanate or aromatic aliphatic isocyanate such as tolylene diisocyanate (TDI), diphenylmethane diisocyanate (MDI), xylene diisocyanate (XDI), and tetramethylxylylene diisocyanate (TMXDI); and aliphatic isocyanate such as hexamethylene diisocyanate (HDI), bis(isocyanatomethyl)cyclohexane (H6XDI), isophorone diisocyanate (IPDI), and dicyclohexylmethane diisocyanate (H12MDI).

The isocyanate-based compound may be a polymer or a derivative of the aforementioned monomeric isocyanate. The isocyanate compound may typically be isocyanate of trimeric nurate type; isocyanate of adduct type typically having 1,1,1-trimethylolpropane reacted therewith; or isocyanate of biuret type whose structure is ascribed to reaction with biuret. The isocyanate compound may be an isocyanate having an aromatic ring, from the viewpoint of excellent reactivity with the (meth)acrylic resin.

If the (meth)acrylic resin is (meth)acrylic polyol, the content of the isocyanate compound may be determined so as to equalize the number of OH groups in the acrylic polyol and the number of NCO groups in the isocyanate compound.

The anchor coat layer 2 may further contain a silane coupling agent, from the viewpoint of further improving adhesion with the inorganic oxide layer 3. Examples of the silane coupling agent include epoxy-based silane coupling agent having an epoxy group, such as 3-glycidoxypropyltrimethoxysilane; amino-based silane coupling agent having an amino group, such as 3-aminopropyltrimethoxysilane; mercapto-based silane coupling agent having a mercapto group, such as 3-mercaptopropyltrimethoxysilane; and isocyanate-based silane coupling agent having NCO group, such as 3-isocyanatopropyltriethoxysilane. Each of these silane coupling agents may be used alone, or in a combination of two or more kinds thereof.

The material that constitutes the anchor coat layer 2 may additionally contain a polyurethane resin. With the polyurethane resin contained in the material that constitutes the anchor coat layer 2, the barrier film 10 can have high heat resistance, and high durability against heat sterilization treatment. The polyurethane resin may be formed from acid group-containing polyurethane and polyamine. The polyurethane resin can be obtained by binding an acid group of the acid group-containing polyurethane and an amino group of a polyamine as a crosslinking agent. That is, the polyurethane resin may be understood to be a reaction product of the acid group-containing polyurethane and polyamine, or a product formed by crosslinking the acid group-containing polyurethane with polyamine. The bond between the acid group of the acid group-containing polyurethane and the amino group of polyamine may be an ionic bond (ionic bond between a carboxyl group and a tertiary amino group, for example), or may be a covalent bond (amide bond, for example).

The polyurethane resin may also be added with a silane coupling agent or a carbodiimide compound. With the silane coupling agent or the carbodiimide compound thus added, the polyurethane resin can form a crosslinked structure, thus further enhancing adhesion between the base layer 1 and the inorganic oxide layer 3. The silane coupling agent employable herein may be any of those commonly used, and is exemplified by a compound in which an alkoxy group and an organic reactive group are bound to a silicon atom.

The thickness of the anchor coat layer 2 is not particularly limited as long as the thickness can improve the adhesion between the base layer 1 and the inorganic oxide layer 3, but is preferably 30 nm or more. In this case, the anchor coat layer 2 will have an improved surface smoothness as compared with the case where the thickness of the anchor coat layer 2 is less than 30 nm, thus making the thickness of the inorganic oxide layer 3 more uniform, and further improving the oxygen barrier property. Hence, the barrier film 10 can further improve its oxygen barrier property. The thickness of the anchor coat layer 2 is preferably 40 nm or more, and more preferably 50 nm or more. By increasing the thickness of the anchor coat layer 2, degradation of the water vapor barrier property under external force such as stretching can be further suppressed.

The thickness of the anchor coat layer 2 is preferably 2000 nm (2 µm) or less. In this case, the barrier film 10 will have further improved flexibility, as compared with a case where the thickness of the anchor coat layer 2 exceeds 2000 nm, and the barrier film 10 will have further improved oxygen gas barrier property after abuse. The thickness of the anchor coat layer 2 is preferably 1500 nm (1.5 µm) or less.

The thickness of the anchor coat layer 2 is preferably 50 nm (0.05 µm) or more and 2000 nm (2 µm) or less. The barrier film 10 can further suppress the deterioration of the water vapor barrier property when subjected to external force such as stretching. In addition, the barrier film 10 will have further improved flexibility, and will have further improved oxygen gas barrier property after abuse.

The anchor coat layer 2 may be formed, for example, by applying an anchor coat solution onto the skin layer 11 of the base layer 1, by a method such as gravure coating, roll coating, or bar coating, followed by drying.

The softening temperature T2 of the anchor coat layer 2 may only be higher than the softening temperature T1 of the skin layer 11, and preferably falls in the range of 140°C or higher and 195°C or lower.

When the softening temperature T2 is 140°C or higher, the anchor coat layer 2 can have enhanced heat resistance, will be less likely to deform under high temperatures during heat sterilization treatment such as retort processing, and can reduce damage to the inorganic oxide layer 3. The barrier film 10 can, therefore, further improve the oxygen permeability even after heat sterilization treatment.

The softening temperature T2 is preferably 142°C or higher, more preferably 145°C or higher, and particularly preferably 150°C or higher.

Further, when the softening temperature T2 is 195°C or lower, the anchor coat layer 2 will not be excessively hard, will be likely to become more durable against deformation of the barrier film 10 during heat sterilization treatment such as retort processing, and the inorganic oxide layer 3 is less likely to be damaged.

The softening temperature T2 of the anchor coat layer 2 is more preferably 192°C or lower, and even more preferably 190°C or lower.

Note that the anchor coat layer 2 may have only the softening temperature T2, or may have one or more additional softening temperatures higher than the softening temperature T2. If the anchor coat layer 2 has a plurality of softening temperatures, the softening temperature T2 is defined by the lowest one of them.

The softening temperature T2 of the anchor coat layer 2 is controllable by changing the blending ratio of the components in the anchor coat layer-forming composition, or by modifying coating conditions (drying temperature, etc.) in a coating process of the anchor coat layer-forming composition.

### [Inorganic Oxide Layer]

The inorganic oxide layer 3 contains an inorganic oxide. The inorganic oxide layer 3 may be formed directly or not directly on the anchor coat layer 2; however, from the viewpoint of improving gas barrier properties against water vapor, oxygen, and the like, it is preferable that the inorganic oxide layer 3 is formed directly on the anchor coat layer 2. The inorganic oxide layer 3 may be transparent or may not be transparent.

Examples of the inorganic oxide include aluminum oxide, silicon oxide, tin oxide, magnesium oxide, and mixtures of these oxides. The inorganic oxide may be at least one species selected from aluminum oxide and silicon oxide, from the viewpoint of excellent sterilization resistance.

The thickness of the inorganic oxide layer 3 may be 5 nm or more, 10 nm or more, or 15 nm or more, from the viewpoint of uniformity of film thickness and excellence in the gas barrier property. The thickness may be 300 nm or less, 150 nm or less, or 100 nm or less, from the viewpoint of making the inorganic oxide layer 3 less likely to crack even under external force applied after the film formation. From these viewpoints, the thickness of the inorganic oxide layer 3 may be 5 to 300 nm, 10 to 150 nm, or 15 to 100 nm.

The inorganic oxide layer 3 may be formed typically by vacuum vapor deposition, plasma-assisted deposition, ion beam-assisted deposition, sputtering, or reactive vapor deposition. The inorganic oxide layer 3 may be formed by vacuum vapor deposition from the viewpoint of excellent productivity; may be formed by plasma-assisted deposition or ion beam-assisted deposition, from the viewpoint of excellent adhesion between the inorganic oxide layer 3 and the anchor coat layer 2, and from the viewpoint of improving the denseness of the inorganic oxide layer 3; or may be formed by reactive vapor deposition with use of oxygen or other various gases blown therein, from the viewpoint of excellent transparency of the inorganic oxide layer 3.

Vacuum vapor deposition may employ heating systems exemplified by an electron beam heating system, a resistance heating system, and an induction heating system. The heating system for vacuum vapor deposition may be an electron beam heating system, from the viewpoint of wide range of choice of materials to be evaporated.

### [Gas Barrier Layer]

The gas barrier layer 4 is arranged on the inorganic oxide layer 3 on the side thereof opposite to the anchor coat layer 2. Since the gas barrier film 10 includes the gas barrier layer 4, the inorganic oxide layer 3 can be protected, and the gas barrier property of the barrier film 10 can be further improved. The barrier film 10 does not always necessarily have the gas barrier layer 4 provided thereto.

The gas barrier layer 4 may contain a silicon compound or a hydrolysate thereof, and a water-soluble polymer that contains hydroxyl group.

The silicon compound may be at least one kinds selected from Si(OR¹)₄ and R²Si(OR³)₃. Each of OR¹ and OR³ is independently a hydrolyzable group, and R² is an organic functional group. R² is exemplified by vinyl group, epoxy group, methacryloxy group, ureido group, and isocyanate group. Si(OR¹)₄ may be tetraethoxysilane (Si(OC₂H₅)₄), from the viewpoint that it is relatively stable in an aqueous solvent after hydrolysis.

Examples of water-soluble polymers having a hydroxyl group include polyvinyl alcohol, polyvinyl pyrrolidone, starch, methyl cellulose, carboxymethyl cellulose, and sodium alginate. The water-soluble polymer that contains hydroxyl group may be polyvinyl alcohol, from the viewpoint of excellence in the gas barrier property.

The gas barrier layer 4 may further contain an additive such as isocyanate compound, silane coupling agent, dispersant, stabilizer, viscosity modifier or colorant, as necessary.

The gas barrier layer 4 may have a thickness of 0.1 µm or more, or 0.3 µm or more, and 5 µm or less, or 1 µm or less. The gas barrier layer 4 may have a thickness of 0.1 to 5 µm, or 0.3 to 1 µm.

When the thickness of the gas barrier layer 4 is 0.1 µm or more, the barrier properties are less likely to degrade after retort processing. When the thickness of the gas barrier layer 4 is 5 µm or less, good barrier properties are readily achieved because deterioration of the gas barrier layer 4 due to insufficient drying during coating is less likely to occur. When the thickness of the gas barrier layer 4 is 1 µm or less, better barrier properties are readily achieved because deterioration of the gas barrier layer 4 due to insufficient drying during coating is even less likely to occur.

The gas barrier layer 4 may be formed typically by dissolving a water-soluble polymer in water or a water/alcohol mixed solvent, to which a silicon compound or a hydrolysate thereof is added, then by coating the mixed solution on the inorganic oxide layer 3 by a method such as gravure coating, roll coating, or bar coating, followed by drying.

When the water-soluble polymer is polyvinyl alcohol, the content of polyvinyl alcohol in the mixed solution may be 20% by mass or more, or 25% by mass or more, relative to the total solid content of the mixed solution, from the viewpoint of easily forming the gas barrier layer 4, and may be 50% by mass or less, or 40% by mass or less, from the viewpoint of excellence in the gas barrier property. The content of polyvinyl alcohol in the mixed solution may also be 20 to 50% by mass, or 25 to 40% by mass, relative to the total solid content of the mixed solution.

### [Softening Temperature]

The softening temperature is measured on a cross section of the individual layers of the barrier film 10.

### (Measurement Sample)

First, the barrier film 10 is prepared. In this process, the barrier film 10 per se may be prepared, or a laminate having the barrier film 10 and another film such as a sealant layer laminated thereto, may be prepared.

Next, the barrier film 10 is cut with a razor into a strip-shaped or wedge-shaped piece, and the obtained cut piece is embedded with an embedding resin to obtain a block piece. The embedding resin used herein is a photocurable resin. The photocurable resin usable herein is, for example, D-800 (trade name) from Toagosei Co., Ltd. Note, the barrier film 10 or the laminate before cutting may be corona-treated on top and back faces thereof, in order to prevent the barrier film 10 after embedding from separating from the embedding resin.

Next, the block piece is irradiated by light to cure the embedding resin, to obtain an embedding resin.

Next, the cured block piece is fixed with an AFM sample holder insert, the embedding resin is trimmed with a glass knife at normal temperature (25°C), a cross section of the barrier film 10 is cut with a cross section cutter, and then further cut with a diamond knife of the cross section cutter at low temperatures (-40°C) until a mirror surface is achieved, to obtain a measurement sample having the barrier film 10 exposed in the cross section.

The cutting of the cross section with the diamond knife may take place at a cutting speed of 1.0 mm/s, and a cutting thickness of 100 nm. The measurement sample is subjected to measurement of the softening temperature, while being fixed with the AFM sample holder insert.

The cross-section cutter usable herein may typically be an ultramicrotome EM UC7 (trade name) or a cryosystem EM FC7 (trade name) from Leica. Direction of cutting was set in parallel to interfaces between adjoining layers.

### (Method for Measuring Softening Temperature)

The softening temperature is a temperature at which a substance such as resin exhibits a softening behavior. The softening temperature in this embodiment is measured by subjecting the measurement sample to local thermal analysis (LTA), under an atomic force microscope (AFM).

Heating of the measurement sample, for measuring the softening temperature, is effected by applying voltage to a cantilever equipped with a heater. In the local thermal analysis (LTA), shape of a cross section of the measurement sample is analyzed, the cross section of the measurement sample is pressed at predetermined points under the cantilever with a certain force (contact pressure), the sample is heated while keeping the contact pressure constant, and the temperature, at which change in the level of height (Z displacement) of the cantilever occurs according to change in the hardness of the sample surface between before and after the heating, is estimated as the softening temperature. The positions pressed herein under the cantilever with the contact pressure fall on a center part of each of the skin layer 11**,** the anchor coat layer 2, and the core layer 12. The change in the height position of the cantilever refers to a change caused by a rise in the vertical position of the cantilever due to thermal expansion of the sample surface, and a fall in the vertical position of the cantilever due to softening of the sample surface. When the applied voltage to the heater of the cantilever at which the height position of the cantilever changes, is then converted to the softening temperature, it is possible to obtain the softening temperature locally in a nanoscale region and in the vicinity of the surface.

Apparatuses used herein for measuring the softening temperature include an atomic force microscope (AFM) under a trade name of MFP-3D-SA, and a local thermal analysis option under a trade name of Ztherm system, both from Oxford Instruments. In the surface shape measurement an AC mode (tapping mode) is employed, and in the softening temperature measurement a contact mode is employed.

The cantilever used herein is AN2-200 (trade name) from Anasis Instruments Corporation, having a spring constant of 0.5 to 3.5 N/m.

The voltage application rate (temperature rise rate) of the cantilever, during the measurement of the softening temperature, is set to 0.5 V/sec.

In the Ztherm system the contact pressure of the cantilever is controlled to be constant. The contact pressure represents a force that corresponds to the amount of change in deflection of the cantilever, between before and after contact of the cantilever with the sample. The deflection is obtainable as a voltage unit (also referred to as "deflection voltage", hereinafter), by irradiating laser light on the back of the cantilever, and detecting the reflected light with a laser displacement sensor. Since the deflection voltage can vary depending on the applied voltage during heating, even in the non-contact state with the sample, it is necessary to control the contact pressure after subtracting the change in the deflection voltage due to the applied voltage. Ztherm system has a detrend correction function designed to acquire the change in the deflection voltage versus the applied voltage, by which Ztherm system applies the measurement voltage to the cantilever while keeping the cantilever away from the sample surface, and increases the measurement voltage from 0 V up to the maximum applied voltage, thus correcting the applied voltage by the detrend correction. In this embodiment, the shape of the surface is measured, and, prior to the measurement of the softening temperature, a detrend correction is performed on the applied voltage used for the measurement at a voltage application rate (temperature rise rate) of 0.5 V/sec, and then the measurement is carried out. The contact pressure is set so as to adjust the amount of change in the deflection voltage, for example, to 0.2 V for the measurement of the softening temperature T1 of the skin layer 11 of the base layer 1; 0.2 V for the measurement of the softening temperature T3 of the core layer 12 of the base layer 1; and 1.5 V for the measurement of the softening temperature T2 of the anchor coat layer 2.

Amount of downward displacement of the cantilever, at which the measurement is stopped, is set to 10 nm.

The softening point is defined as the point where the height in the vertical direction (Z displacement) of the cantilever becomes maximum, and the applied voltage at this point is read.

A calibration curve plotting the applied voltage versus temperature is then created, in order to convert the voltage applied to the heater of the cantilever to the softening temperature. As calibration samples, four types of polymer materials whose melting points differ from each other by 50°C or more are used. The polymer materials used herein are those having the melting point equal to or higher than that of the softening temperature of the measurement sample, and those having the melting point equal to or lower than the softening temperature. The calibration samples are preliminarily subjected to measurement of melting point (melting peak temperature) with use of a differential scanning calorimeter (DSC). The melting point is defined as the softening temperature of the calibration sample. The individual calibration samples are measured by local thermal analysis at different points of measurement, in which the average values of the applied voltage obtained from the softened points are plotted versus the softening temperatures (melting points obtained by the DSC measurement) of the calibration samples, while being approximated by a cubic function based on the least squares method, thereby creating the calibration curve. The calibration samples used herein are polycaprolactone pellets (melting point: 60°C), low density polyethylene pellets (melting point: 112°C), polypropylene pellets (melting point: 166°C), and biaxially stretched polyethylene terephthalate film (melting point: 255°C), and cross section samples manufactured in environments at temperatures equal to or lower than the respective glass transition temperatures are used for each. The cross section samples are manufactured with use of an ultramicrotome and a cryosystem, by which the cross sections are cut in an environment at -80°C for polycaprolactone, -140°C for low-density polyethylene, -40°C for polypropylene, and room temperature (25°C) for polyethylene terephthalate.

With use of the calibration curve of the applied voltage versus the temperature, a temperature that corresponds to the applied voltage at the softening point is found, to be regarded as the softening temperature.

### <Laminate>

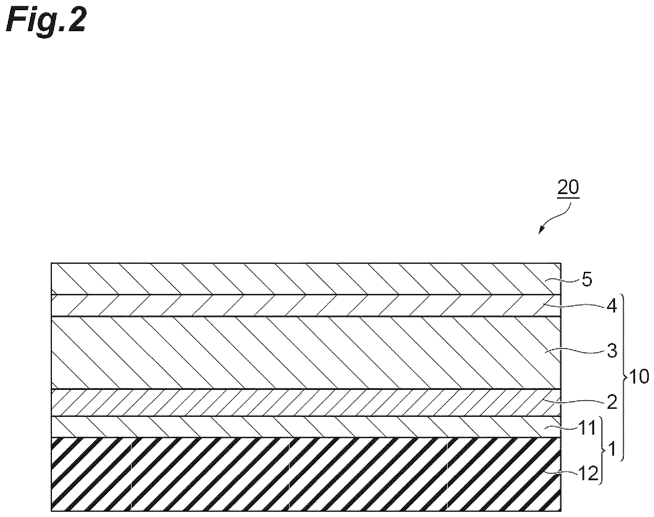

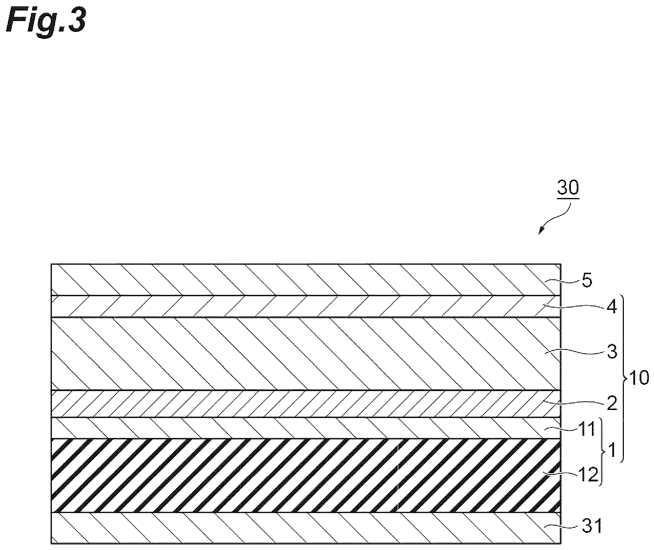

Next, a laminate, as another aspect of the present disclosure, will be described while referring to FIG. 2 or 3. FIG. 2 is a schematic cross-sectional view illustrating a first embodiment of a laminate according to another aspect of the present disclosure, and FIG. 3 is a schematic cross-sectional view illustrating a second embodiment of a laminate according to another aspect of the present disclosure. In FIGS. 2 and 3, all identical or equivalent components as those in FIG. 1 are denoted by the same reference signs.

The laminate of the present disclosure, like a laminate 20 illustrated in FIG. 2, has the aforementioned barrier film 10, and a sealant layer 5 as another film. Alternatively, the laminate of the present disclosure, like a laminate 30 illustrated in FIG. 3, may have the aforementioned barrier film 10, the sealant layer 5, and a second base layer 31 arranged on a surface of the barrier film 10, on a side opposite to the sealant layer 5. The second base layer 31 may contain, for example, a polyolefin resin.

In the laminate 20 or 30, the barrier film 10 has excellent adhesion with the sealant layer 5 even after heat sterilization treatment, so that the laminate can suppress delamination from occurring, even after heat sterilization treatment.

The sealant layer 5 may only contain a resin having heat-sealable property. This sort of resin is exemplified by polyolefin resin and polyester resin.

Examples of polyolefin resin include polyethylene resin and polypropylene resin. Among them, polypropylene resin is preferably used as the polyolefin resin, from the viewpoint of improving the recyclability.

Polypropylene resin used herein may be same as the polypropylene resin contained in the core layer 12.

The sealant layer 5 may be a stretched film or an unstretched film, and is preferably an unstretched film, from the viewpoint that it will have a melting point lower than that of the base layer 1.

The sealant layer 5 may have a thickness of 10 µm or more, or 20 µm or more, or 200 µm or less, or 100 µm or less. The thickness of the sealant layer 5 may be 10 to 200 µm, or 20 to 100 µm. If the thickness of the sealant layer 5 is 10 µm or more, a packaging container such as a packaging bag becomes less likely to break. When the thickness of the sealant layer 5 is 200 µm or less, the sealant layer 5 will keep good heat-sealable property, and will be further less probable to cause sealing failure.

The laminate 20 may have an adhesive layer (not illustrated), interposed between the barrier film 10 and the sealant layer 5. The adhesive layer may typically be formed of polyurethane resin obtained by allowing polyester polyol, polyether polyol, acrylic polyol, carbonate polyol or the like, to react with a di- or higher functional isocyanate compound.

Besides the polyurethane resin, the adhesive layer may typically contain carbodiimide compound, oxazoline compound, epoxy compound, phosphorus compound, or silane coupling agent, from the viewpoint of improving adhesiveness.

Examples of the polyolefin resin, if the second base layer 31 contains the polyolefin, include polyethylene resin and polypropylene resin. Polyolefin resin is preferably polypropylene resin, from the viewpoint of enhancing rigidity of the laminate 30.

Polypropylene resin used herein may be same as the polypropylene resin contained in the core layer 12.

In an X-ray diffraction pattern acquired by X-ray diffraction measurement for the second base layer 31, a peak intensity ratio A, which is a ratio of peak intensity I₁₁₀ of (110) plane to peak intensity I₀₄₀ of (040) plane, is 0.75 or more.

According to this laminate 20, it is possible to have excellent recyclability and excellent interlayer adhesion even after heat sterilization treatment such as retort processing.

The peak intensity ratio A is preferably 0.80 or more, and more preferably 0.90 or more.

The peak intensity ratio A may be 2 or less, 1.5 or less, 1.3 or less, or 1.1 or less.

### <Packaging Product>

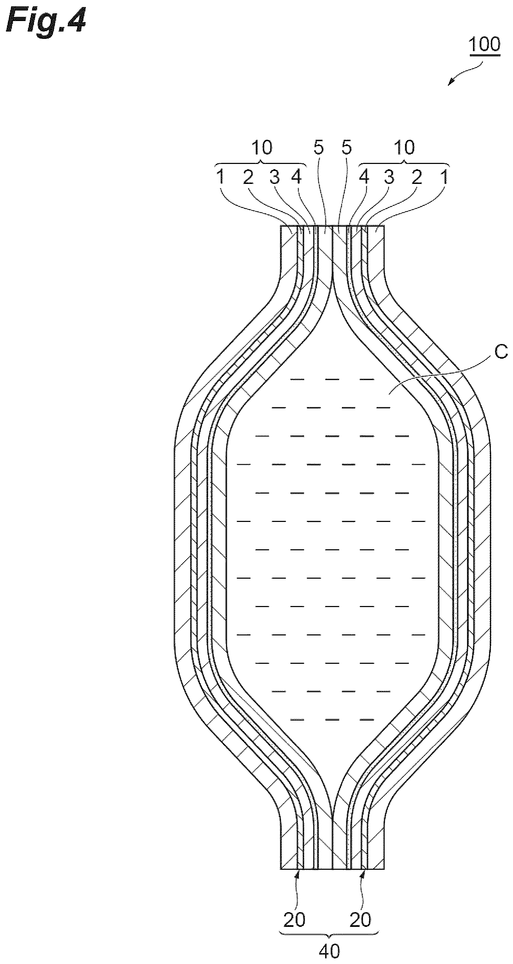

Next, a packaging product, which is yet another aspect of the present disclosure, will be described, while referring to FIG. 4. FIG. 4 is a schematic cross-sectional view illustrating one embodiment of the packaging product, according to yet another aspect of the present disclosure. Note that identical or equivalent components as those in FIGS. 1 and 2 are denoted by the same reference signs.

A packaging product 100 illustrated in FIG. 4 has a packaging bag 40 as the packaging container, and contents C enclosed in the packaging bag 40. The packaging bag 40 is formed by using two laminates 20.

In the packaging product 100, the barrier film 10 keeps excellent adhesion with the sealant layer 5 even after heat sterilization treatment, so that the packaging product can suppress delamination from occurring, even after heat sterilization treatment.

The contents C are not particularly limited, and examples of the contents C include food, liquid, medicine, and electronic components.

In FIG. 4, the packaging product 100 can be formed by stacking two laminates 20 so as to oppose the sealant layers 5, heat-sealing a part of the circumference to form the packaging bag 40, inserting the contents C through a part of the circumference of the packaging bag 40 remaining unsealed, and then heat-sealing the part of the circumference remaining unsealed.

The packaging product 100 may be formed using a single laminate 20. The packaging product 100 in this case may also be formed by folding a single laminate 20 in half, heat-sealing a part of the circumference other than the folded part to form the packaging bag, inserting the contents C through a part of the circumference of the packaging bag remained unsealed, and then heat-sealing the part of the circumference having been remained unsealed.

The packaging product 100 may further have a plug attached to the packaging bag 40. The plug may be fixed while being sandwiched between two laminates 20 or two laminates 30 that constitute the packaging bag 40; or may be fixed to a discharge port having been attached to an opening formed by punching a face of the packaging bag 40. The plug may be arranged either at the top, or at the obliquely upper side of the packaging bag 40. For the packaging bag 40 having a top face, a bottom face, and a side face connecting them, a face to which the spout is attached may be any of the top face, bottom face, or the side face of the packaging bag 40.

In a case where the contents C are liquid or gel, the plug may be a spout plug (so-called spout) to which the user directly places the mouth for sucking. The packaging product 100 in this case may have, besides the pouring spout, a straw that extends through the pouring spout into the packaging bag 40 to reach the bottom.

In a case where the contents C in the packaging bag 40 are liquid such as soft drink or alcoholic beverage, the packaging product may be a bag-in-box further having a carton (outer box) that encloses a bag (inner bag) as the packaging bag. The packaging product in this case may further have a spout plug (tube) which is arranged outside the carton so as to extend through the carton to be connected to the bag.

The spout plug may also be formed of the same resin as the base layer 1 of the barrier film 10, for improved recyclability.

### <Laminate>

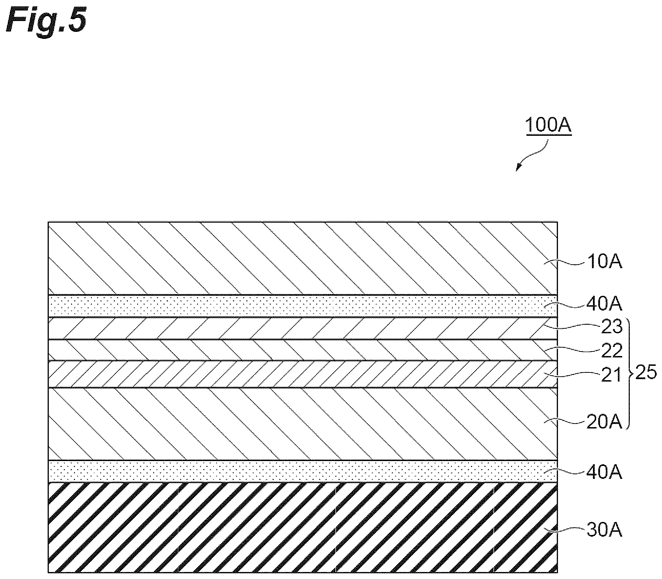

First, a third embodiment of the laminate of the present disclosure will be described, while referring to FIG. 5. FIG. 5 is a schematic cross-sectional view of the laminate according to the third embodiment of the present disclosure.

A laminate 100A illustrated in FIG. 5 has a second base layer 10A, a first structure 25 (also referred to as "barrier film", hereinafter) that contains the first base layer 20A, and a sealant layer 30A arranged in this order.

Each of the second base layer 10A, the first base layer 20A, and the sealant layer 30A contains a polypropylene film.

In an X-ray diffraction pattern acquired by X-ray diffraction measurement for the second base layer 10A, a peak intensity ratio A (= I₁₁₀/I₀₄₀), which is a ratio of peak intensity I₁₁₀ of (110) plane to peak intensity I₀₄₀ of (040) plane, is 0.75 or more.

The second base layer 10A and the barrier film 25 may be bonded with use of the adhesive layer 40A, and the sealant layer 30A and the barrier film 25 may be bonded with use of the adhesive layer 40A.

The barrier film 25 includes an anchor coat layer 21, and a vapor-deposited layer 22 as the inorganic oxide layer in this order from the side of the first base layer 20A, between the first base layer 20A and the second base layer 10A. The barrier film 25 may further have a gas barrier layer 23, on the vapor-deposited layer 22.

In the barrier film 25, when the softening temperatures of the anchor coat layer 21 and the first base layer 20A are measured by local thermal analysis (LTA), the softening temperature T1 of the first base layer 20A is lower than the softening temperature T2 of the anchor coat layer 21.

In the laminate 100A, the barrier film 25 has excellent lamination strength with the sealant layer 30A, even after sterilized under heating, with the sealant layer 30A attached as another film to the gas barrier layer 23.

Such laminate 100A can have excellent recyclability, and excellent interlayer adhesion even after heat sterilization treatment such as retort processing. In particular, the laminate 100A can enhance the interlayer adhesion between the second base layer 10A and the first base layer 20A, after heat sterilization treatment. The second base layer 10A forms the outermost layer in a packaging container manufactured with use of the laminate 100A, and is susceptible to external force. Hence, the laminate 100A, capable of enhancing the interlayer adhesion between the second base layer 10A and the first base layer 20A after heat sterilization treatment, is useful as a laminate for constituting the packaging container.

Hereinafter, the second base layer 10A, the barrier film 25, the sealant layer 30A, and the adhesive layer 40A will be described in detail.

### [Second Base Layer]

The second base layer 10A contains a polypropylene film. The polypropylene film contains a polypropylene resin.

Polypropylene resin is exemplified by homopolypropylene which is a homopolymer of propylene, and propylene-α-olefin copolymer which is a copolymer of propylene and α-olefin. These polymers may be used alone, or in a combination of two or more kinds thereof.

The second base layer 10A may further have a layer that contains propylene-α-olefin copolymer, or a mixture of propylene-α-olefin copolymer and homopolypropylene, on the surface of the polypropylene film, for the purpose of improving adhesion of the second base layer 10A with a layer in contact therewith.

The polypropylene resin contained in the polypropylene film may be any of fossil fuel-derived polypropylene resin obtained by homopolymerizing ordinary fossil fuel-derived propylene, or by copolymerizing such propylene with another monomer; recycled polypropylene resin obtained by recycling; and biomass-derived polypropylene resin obtained by homopolymerizing propylene derived from plant or other biomass, or by copolymerizing such propylene with another monomer. These polypropylene resins may be used alone, or in a combination of two or more kinds thereof.

The second base layer 10A may further contain additives as necessary. The additive is exemplified by organic additives including antioxidants, stabilizers, lubricants such as calcium stearate, fatty acid amide or erucic acid amide, or antistatic agent; and particulate lubricants such as silica, zeolite, Syloid, hydrotalcite, or silicon particle.

The polypropylene film contained in the second base layer 10A may be a stretched film or an unstretched film. The stretched film is obtainable by forming the polypropylene resin into a sheet, and then by stretching the sheet by an ordinary means. The stretched film may be uniaxially oriented film or biaxially oriented film.

The polypropylene film is preferably an unstretched film. The laminate 100A in this case can have more excellent interlayer adhesion even after heat sterilization treatment.

The thickness of the second base layer 10A is not particularly limited, which may typically be 5 µm or more, 10 µm or more, or 15 µm or more. The thickness of the first base layer 20A may also be 100 µm or less, 80 µm or less, 60 µm or less, or 40 µm or less.

The thickness of the second base layer 10A may be larger than the thickness of the first base layer 20A, or may be equal to or less than the thickness of the first base layer 20A.

In an X-ray diffraction pattern acquired by X-ray diffraction measurement for the second base layer 10A, a peak intensity ratio A, which is a ratio of peak intensity I₁₁₀ of (110) plane to peak intensity I₀₄₀ of (040) plane, is 0.75 or more.

The peak intensity ratio A is preferably 0.80 or more, and more preferably 0.90 or more.

The peak intensity ratio A may be 2 or less, 1.5 or less, 1.3 or less, or 1.1 or less.

### [Barrier Film]

The barrier film 25 includes the anchor coat layer 21, the vapor-deposited layer 22, and the gas barrier layer 23, between the first base layer 20A and the second base layer 10A. When the vapor-deposited layer 22 and the gas barrier layer 23 are provided between the second base layer 10A and the first base layer 20A in this way, the laminate 100A can have more excellent interlayer adhesion even after heat sterilization treatment, as compared with the case where the vapor-deposited layer 22 and the gas barrier layer 23 are provided between the first base layer 20A and the sealant layer 30A.

### (1) Anchor Coat Layer

The anchor coat layer 21 is a layer for further enhancing adhesion between the first base layer 20A and the vapor-deposited layer 22, and is interposed between the first base layer 20A and the vapor-deposited layer 22.

The material constituting the anchor coat layer 21 includes an organic polymer. The organic polymer may be at least one of polyacrylic resin, polyol-based resin, polyurethane-based resin, polyamide-based resin, or a reaction product of these resins.

The polyurethane-based resin may contain a reaction product of a polyol compound and an isocyanate compound. From the viewpoint of transparency, the polyol compound is preferably an acrylic polyol. The isocyanate compound mainly functions as a crosslinking agent or a curing agent.

Ratio of the organic polymer in the material constituting the anchor coat layer 21 may be 50% by mass or more, or may be 60% by mass or more, 70% by mass or more, 80% by mass or more, or 90% by mass or more. When the ratio of the organic polymer is 50% by mass or more, the heat resistance, water resistance, and flexibility of the barrier film 25 can be further improved.

The softening temperature T2 of the anchor coat layer 21 may only be higher than the softening temperature T1 of the first base layer 20A, and preferably falls in the range of 140°C to 195°C.

When the softening temperature T2 is 140°C or higher, the anchor coat layer 21 can have enhanced heat resistance, can be less likely to deform under high temperatures during heat sterilization treatment such as retort processing, and can reduce damage to the vapor-deposited layer 22. The barrier film 25 can, therefore, further improve the oxygen permeability even after heat sterilization treatment.

The softening temperature T2 is preferably 142°C or higher, more preferably 145°C or higher, and particularly preferably 150°C or higher.

Furthermore, when the softening temperature T2 of the anchor coat layer 21 is 195°C or lower, the anchor coat layer 21 does not become excessively hard, making it easier to obtain durability against deformation of the barrier film 25 during heat sterilization treatment such as retorting, and the vapor-deposited layer 22 becomes less likely to be damaged.

The softening temperature T2 of the anchor coat layer 21 is more preferably 192°C or lower, and even more preferably 190°C or lower.

Note the anchor coat layer 21 may have only the softening temperature T2, or may have one or more additional softening temperatures higher than the softening temperature T2. If the anchor coat layer 21 has a plurality of softening temperatures, the softening temperature T2 is defined by the lowest one of them.

The softening temperature T2 of the anchor coat layer 21 is controllable by changing the blending ratio of the components in the anchor coat layer-forming composition, or by modifying coating conditions (drying temperature, etc.) in a coating process of the anchor coat layer-forming composition.

The thickness of the anchor coat layer 21 is not particularly limited so far as the thickness is enough to improve the adhesion between the first base layer 20A and the vapor-deposited layer 22, and may be 0.01 µm or more. In this case, it is possible to further improve the surface smoothness of the surface of the anchor coat layer 21 over that of the first base layer 20A, as compared with the case where the anchor coat layer 21 has a thickness of less than 0.01 µm, to make the thickness of the vapor-deposited layer 22 more uniform, and to further improve the oxygen barrier property. Hence, the laminate 100A can further improve the oxygen barrier property.

The thickness of the anchor coat layer 21 may be 0.03 µm or more, 0.04 µm or more, or 0.05 µm or more. With the anchor coat layer 21 having an increased thickeness, the water vapor barrier property may be further suppressed from degrading under external force such as stretching.

The thickness of the anchor coat layer 21 may be 1 µm or less. In this case, the laminate 100A will have further improved flexibility, and further improved oxygen gas barrier property after abuse, as compared with a case where the thickness of the anchor coat layer 21 exceeds 1 µm.

The thickness of the anchor coat layer 21 may be 0.3 µm or less, or 0.2 µm or less.

Note that the anchor coat layer 2 may be used in place of the anchor coat layer 21.

### (2) Vapor-Deposited Layer

The vapor-deposited layer 22 is a layer obtainable by vapor deposition, and can further improve the gas barrier property of the laminate 100A. The vapor-deposited layer 22 may be transparent or may not be transparent.

The vapor-deposited layer 22 is an inorganic oxide layer, and is made of an inorganic oxide. The inorganic oxide is exemplified by oxide of metal. The metal is exemplified by at least one selected from the group consisting of Si, Al, Mg, Sn, Ti, and In. Such oxide of metal is exemplified by aluminum oxide (AlOₓ), silicon oxide (SiOₓ), tin oxide and magnesium oxide. These oxides may be used alone, or in a combination of two or more kinds thereof. Among them, aluminum oxide or silicon oxide is preferred from the viewpoint of various types of sterilization resistance. In particular, the inorganic oxide is preferably silicon oxide. The laminate 100A in this case can have a more excellent vapor barrier property.

The vapor-deposited layer 22 may be composed of a single layer, or a plurality of layers.

The thickness of the vapor-deposited layer 22, although variable depending on the type of material to be used, is preferably 5 to 300 nm in general, so that the value thereof is appropriately selected from this range. When the thickness of the vapor-deposited layer 22 is 5 nm or more, the vapor-deposited layer 22 will be more likely to form a uniform film, and to fully exhibit the gas barrier function. On the other hand, when the thickness of the vapor-deposited layer 22 is 300 nm or less, the vapor-deposited layer 22 will be more likely to keep the flexibility, and will be more likely to be prevented from cracking due to some external factor such as folding or stretching of the laminate 100A.

The thickness of the vapor-deposited layer 22 is more preferably 10 to 150 nm.

The inorganic oxide layer 3 may be used instead of the vapor-deposited layer 22.

### (3) Gas Barrier Layer

The gas barrier layer 23 is a layer having a gas barrier property, and is obtainable with use of a gas barrier layer-forming composition. The gas barrier layer-forming composition contains a water-soluble polymer and a silicon compound. The silicon compound contains at least one of a first silicon compound and a second silicon compound.

The first silicon compound contains at least one of a silicon alkoxide represented by formula (1) below and a hydrolysate thereof.

The second silicon compound contains at least one of a silane coupling agent represented by formula (2) below and a hydrolysate thereof.

Si(OR¹)₄ ··· (1)

(In formula (1), OR¹ represents a hydrolyzable group.)

(R²Si(OR³)₃)ₙ ··· (2)

(In formula (2), OR³ represents a hydrolyzable group, and R² represents a monovalent organic group. n is an integer more than or equal to 1.)

The water-soluble polymer has hydroxyl group. The water-soluble polymer is exemplified by polyvinyl alcohol resin, modified products thereof, and polyacrylic acid. These polymers may be used alone, or in a combination of two or more kinds thereof. Among them, a polyvinyl alcohol resin or a modified product thereof is preferred as the water-soluble polymer. The gas barrier layer-forming composition in this case can impart a more excellent gas barrier property to the laminate 100A by curing. The gas barrier layer-forming composition can also add more excellent flexibility to the laminate 100A even after cured, thus successfully suppressing the gas barrier layer 23 from cracking during the process of lamination or the like.

The water-soluble polymer, if formed of polyvinyl alcohol resin or modified product thereof, preferably has a degree of saponification of 95% or more, although not specifically limited, which may even be 100% from the viewpoint of improving the gas barrier property of the laminate 100A. When the degree of saponification of the water-soluble polymer is 95% or more, the gas barrier layer 23 will have improved water resistance, thus successfully suppressing a decrease in the gas barrier property of the laminate 100A even in heat sterilization treatment such as retort processing.

The degree of polymerization of the water-soluble polymer is preferably 300 or more, from the viewpoint of improving the gas barrier property of the laminate 100A, although not specifically limited. The degree of polymerization of the water-soluble polymer is preferably 450 to 2400. When the degree of polymerization of the water-soluble polymer is 2400 or less, the coating liquid (gas barrier layer-forming composition) will have viscosity not too high, thus making it possible to form the gas barrier layer 23 with uniform thickness.

The content of the water-soluble polymer is not particularly limited, but is preferably 25% by mass or more, based on the total mass (100% by mass) of the water-soluble polymer and the silicon compound. The curing in this case can further improve the gas barrier property and the interlayer adhesion of the laminate 100A even after heat sterilization treatment. Content rate of the water-soluble polymer is preferably 26% by mass or more, relative to the total mass of the water-soluble polymer and the silicon compound, which is more preferably 27% by mass or more, and particularly preferably 40% by mass or more.

Also, the content of the water-soluble polymer is not particularly limited, but is preferably 60% by mass or less, more preferably 58% by mass or less, and particularly preferably 55% by mass or less, based on the total mass of the water-soluble polymer and the silicon compound (100% by mass). When the content of the water-soluble polymer is 60% by mass or less, the gas barrier layer 23 will have improved water resistance, and the laminate 100A will have further improved gas barrier property and the interlayer adhesion even after heat sterilization treatment.

The first silicon compound is at least one of silicon alkoxide and a hydrolysate thereof. The silicon alkoxide is represented by the aforementioned formula (1). This improves not only the gas barrier property of the laminate 100A, but also improves adhesion between the gas barrier layer 23 and the vapor-deposited layer 22, thus successfully suppressing in-layer separation (delamination) in the laminate 100A.

In formula (1), OR¹ represents the hydrolyzable group. R¹ is exemplified by an alkyl group and -C₂H₄OCH₃. The alkyl group is exemplified by a methyl group and an ethyl group. Among them, an ethyl group is preferred. In this case, the silicon alkoxide is given by tetraethoxysilane (TEOS), which can be relatively stabilized in an aqueous solvent after hydrolyzed.

The content of the first silicon compound is not particularly limited, but is preferably 40% by mass or more, relative to the total mass of the water-soluble polymer and the silicon compound (100% by mass), more preferably 42% by mass or more, and particularly preferably 45% by mass or more. In this case, the gas barrier property and the interlayer adhesion of the laminate 100A can be further improved even after heat sterilization treatment, as compared with the case where the content of the first silicon compound is less than 40% by mass.

Content rate of the first silicon compound is preferably 75% by mass or less, relative to the total mass of the water-soluble polymer and the silicon compound (100% by mass), which is more preferably 74% by mass or less, and particularly preferably 73% by mass or less. When the content of the first silicon compound is 75% by mass or less, the gas barrier layer 23 after curing will not be excessively hard, will be less likely to crack, and will less likely to degrade the gas barrier property. Moreover, this further improves the gas barrier property and the interlayer adhesion of the laminate 100A, even after heat sterilization treatment. Additionally, since the amount of hydrochloric acid needed for hydrolysis can be reduced, which in turn makes an excessive chlorine content in the laminate 100A less likely, the recyclability of the laminate 100A is likely to improve.

The second silicon compound is at least one a silane coupling agent and a hydrolysate thereof. The silane coupling agent is represented by the aforementioned formula (2). This improves adhesion between the gas barrier layer 23 and the vapor-deposited layer 22, thus further improving the interlayer adhesion of the laminate 100A.

In formula (2), R² represents a monovalent organic group, and OR³ represents a hydrolyzable group. n is an integer more than or equal to 1.

The monovalent organic group represented by R² is exemplified by those having a vinyl group, an epoxy group, a mercapto group, an amino group, or an isocyanate group. Among them, the monovalent organic group is preferably the one having an isocyanate group. In this case, the gas barrier layer-forming composition will successfully have more excellent hot water resistance after curing, and can impart larger lamination strength to the laminate 100A, even after heat sterilization treatment.

R³ is exemplified by an alkyl group and -C₂H₄OCH₃. The alkyl group is exemplified by a methyl group and an ethyl group. Among them, a methyl group is preferred. In this case, hydrolysis of the silane coupling agent proceeds rapidly.

Note R³ and R² may be the same or different. If n represents an integer of 2 or more, the plurality of R³s may be identical or may be different.

n is an integer more than or equal to 1. If n represents 1, the silane coupling agent represents a monomer, meanwhile if n represents 2 or more, the silane coupling agent represents a multimer. n preferably is 3. In this case, the gas barrier layer 23 can have improved hot water resistance, and it becomes possible to provide the laminate 100A with higher lamination strength even after heat sterilization treatment.

The silane coupling agent is exemplified by those having a vinyl group such as vinyltrimethoxysilane or vinyltriethoxysilane; those having an epoxy group such as 3-glycidoxypropyltrimethoxysilane, 3-glycidoxypropyltriethoxysilane, 3-glycidoxypropylmethyldimethoxysilane, and 3-glycidoxypropylethyldiethoxysilane; those having a mercapto group such as 3-mercaptopropyltrimethoxysilane and 3-mercaptopropylmethyldimethoxysilane; those having an amino group such as 3-aminopropyltrimethoxysilane and 3-aminopropyltriethoxysilane; and those having an isocyanate group such as 3-isocyanatopropyltriethoxysilane and 1,3,5-tris(3-methoxysilylpropyl) isocyanurate. These silane coupling agents may be used alone, or in a combination of two or more kinds thereof.

Among these silane coupling agents, most preferred is 1,3,5-tris(3-trialkoxysilylalkyl)isocyanurate represented by formula (NCO-R⁴Si (OR³)₃)₃ (where, R⁴ represents -(CH₂)ₙ-, and n is 1 or more). 1,3,5-Tris(3-trialkoxysilylalkyl) isocyanurate can add high water resistance to the gas barrier layer 23, due to hydrophobicity ascribed to the polarity of its nurate moiety.

The content of the second silicon compound is not particularly limited, but is preferably 3% by mass or more, more preferably 5% by mass or more, and particularly preferably 7% by mass or more, relative to the total mass of the water-soluble polymer and the silicon compound (100% by mass). The curing in this case can impart greater lamination strength to the laminate 100A even after heat sterilization treatment, as compared with a case where the content of the second silicon compound is less than 3% by mass.

The content of the second silicon compound is preferably 20% by mass or less, more preferably 15% by mass or less, and particularly preferably 12% by mass or less, relative to the total mass of the water-soluble polymer and the silicon compound (100% by mass). **In** this case, the content of the water-soluble polymer and the first silicon compound in the gas barrier layer 23 becomes relatively high, as compared with a case where the content of the second silicon compound exceeds 20% by mass, so that good gas barrier property can be maintained.

Note that when calculating the contents of the water-soluble polymer, the first silicon compound, and the second silicon compound, the calculation of each of the above contents is performed after converting the mass of the first silicon compound to the mass of SiO₂ and the mass of the second silicon compound to the mass of R²Si(OH)₃.

The gas barrier layer-forming composition may contain known additives such as isocyanate compound, dispersant, stabilizer, viscosity modifier, or colorant as necessary, as long as the gas barrier property will not be degraded.

The thickness of the gas barrier layer 23 is not particularly limited, but is preferably 0.1 µm or more. In this case, the gas barrier property of the laminate 100A can be further improved even after heat sterilization treatment, as compared with the case where the thickness of the gas barrier layer 23 is less than 0.1 µm. The thickness of the gas barrier layer 23 is more preferably 0.15 µm or more and is particularly preferably 0.17 µm or more from the viewpoint of improving the gas barrier property of the laminate 100A.

On the other hand, the thickness of the gas barrier layer 23 is preferably 1.0 µm or less. This makes the laminate 100A less likely to curl, as compared with the case where the thickness of gas barrier layer 23 exceeds 1.0 µm, thus making the laminate more suitable for use as a laminate for forming a packaging container. The thickness of the gas barrier layer 23 is more preferably 0.7 µm or less and is particularly preferably 0.5 µm or less from the viewpoint of improving the flexibility of the laminate 100A.

Note that gas barrier layer 4 may be used in place of the gas barrier layer 23.

### [First Base Layer]

The first base layer 20A is a contact layer in contact with the anchor coat layer 21, and contains a polypropylene film. The polypropylene film contains a polypropylene-based resin (also referred to as "polypropylene resin", hereinafter).

The polypropylene resin is exemplified by homopolypropylene and propylene-α-olefin copolymer. These resins may be used alone, or in a combination of two or more kinds thereof.

The first base layer 20A may further have a layer that contains propylene-α-olefin copolymer, or a mixture of propylene-α-olefin copolymer and homopolypropylene, on the surface of the polypropylene film, for the purpose of improving adhesion of the first base layer 20A with a layer in contact therewith.

The polypropylene resin contained in the polypropylene film may be any of fossil fuel-derived polypropylene resin, recycled polypropylene resin, or biomass-derived polypropylene resin. These polypropylene resins may be used alone, or in a combination of two or more kinds thereof.

The first base layer 20A may further contain an additive as necessary. The additive is exemplified by organic additives including antioxidants, stabilizers, lubricants such as calcium stearate, fatty acid amide or erucic acid amide, or antistatic agents; and particulate lubricants such as silica, zeolite, Syloid, hydrotalcite, or silicon particles.

The polypropylene film contained in the first base layer 20A may be a stretched film or an unstretched film. The stretched film is obtainable by forming the polypropylene resin into a sheet, and then by stretching the sheet by an ordinary means. The stretched film may be a uniaxially oriented film or a biaxially oriented film.

The first base layer 20A is preferably a stretched film, from the viewpoint of adding rigidity to the laminate 100A.

The surface of the first base layer 20A may be subjected to surface treatment such as plasma treatment or corona treatment, in order to enhance adhesion between the first base layer 20A and the anchor coat layer 21.

The first base layer 20A may be identical to or different from the second base layer 10A.

In an X-ray diffraction pattern acquired by X-ray diffraction (XRD) measurement for the first base layer 20A, the peak intensity ratio A (= I₁₁₀/I₀₄₀), which is the ratio of the peak intensity I₁₁₀ of the (110) plane to the peak intensity I₀₄₀ of the (040) plane, is not particularly limited and may be 0.75 or more, or less than 0.75.

The peak intensity ratio A, if less than 0.75, may also be 0.6 or less, 0.55 or less, or 0.5 or less.

Furthermore, the peak intensity ratio A may also be 0.2 or more, 0.3 or more, and 0.4 or more.

For the barrier film 25, T2 -T1 is preferably 70°C or less, although not particularly limited thereto as long as it is larger than 0°C.

When T2 - T1 is 70°C or lower, the difference in flexibility between the first base layer 20A and the anchor coat layer 21 is less likely to become large, which in turn makes a decrease in adhesion between the first base layer 20A and the anchor coat layer 21 less likely.

T2 - T1 is preferably 68°C or less, and more preferably 60°C or less.

Meanwhile, T2 - T1 is preferably 1°C or more, and more preferably 2°C or more. When T2 - T1 is 3°C or more, the first base layer 20A will have an enhanced effect of imparting flexibility, stress applied to the anchor coat layer 21 due to shrinkage of the first base layer 20A after heat sterilization treatment can be moderated, and stress applied to the vapor-deposited layer 22 can be moderated. That is, the difference in strain between the first base layer 20A and the anchor coat layer 21 may be effectively bridged. Therefore, it is possible to suppress the destruction of the vapor-deposited layer 22, which in turn prevents the deterioration of the barrier properties of the vapor-deposited layer 22.

The softening temperature T1 of the first base layer 20A is preferably in the range of 115°C to 170°C, although not particularly limited as long as it is lower than the softening temperature T2 of the anchor coat layer 21. When the softening temperature T1 is 115°C or higher, the first base layer 20A will not excessively lower its heat resistance, will be less likely to soften during heat sterilization treatment, and will be less likely to cause a decrease in adhesion to the anchor coat layer 21 or a deterioration in barrier property. Furthermore, when the softening temperature T1 is 170°C or lower, degradation of the flexibility of the first base layer 20A can be suppressed, and the strength of adhesion between the first base layer 20A and the core layer 12 can be further enhanced.

The softening temperature T1 may be 120°C or higher, 125°C or higher, or 130°C or higher from the viewpoint of imparting heat resistance to the first base layer 20A; or may be 165°C or lower, or 160°C or lower, from the viewpoint of imparting flexibility to the first base layer 20A.

Note the first base layer 20A may have only the softening temperature T1, or may have one or more additional softening temperatures higher than the softening temperature T1. If the first base layer 20A has a plurality of softening temperatures, the softening temperature T1 is defined by the lowest one of them.

The thickness of the first base layer 20A is not particularly limited, which may typically be 5 µm or more, 10 µm or more, or 15 µm or more. Meanwhile, thickness of the first base layer 20A may be 100 µm or less, 80 µm or less, 60 µm or less, or 40 µm or less. When the thickness of the first base layer 20A is 5 µm or more and 100 µm or less, the first base layer 20A will be suppressed from wrinkling or sagging during formation of the gas barrier layer 23, and will have good processability including conveyability.

Note that base layer 1 may be used in place of the first base layer 20A.

### [Adhesive Layer]

The adhesive layer 40A is a layer that bonds the barrier film 25 to the sealant layer 30A, or to the second base layer 10A. An adhesive that composes the adhesive layer 40A is exemplified by a polyurethane resin obtained with use of an adhesive that contains a base resin such as polyester polyol, polyether polyol, acrylic polyol, or carbonate polyol, together with a bifunctional or higher functional isocyanate compound. These types of polyols may be used alone, or in a combination of two or more kinds thereof. A two-liquid curable urethane-based adhesive is preferably used from the viewpoint of heat resistance (heat sterilization treatment resistance) during the heat sterilization treatment.

The adhesive may typically contain carbodiimide compound, oxazoline compound, epoxy compound, phosphorus compound, or silane coupling agent blended thereto, from the viewpoint of enhancing adhesion. The adhesive used for forming the adhesive layer 40A may be an adhesive whose polymer component is derived from biomass, or a biodegradable adhesive, from an environmental viewpoint. The adhesive may aslo have gas barrier property.

The amount of application of the adhesive may be, for example, 0.5 to 10 g/m², from the viewpoint of obtaining a desired level of adhesive strength, shape conformity, or workability. The amount of the adhesive, after removal of the solvent by drying under heating, may be 0.1 to 10 g/m². When the amount of the adhesive after removal of the solvent is 0.1 g/m² or more, the adhesive can be applied uniformly, and the laminate 100A will be more likely to obtain a sufficient level of lamination strength. When the amount of the adhesive after removal of the solvent is 10 g/m² or less, separation inside the adhesive is less likely to occur, and the lamination strength of the laminate 100A is less likely to decrease.

### [Sealant Layer]

The sealant layer 30A comprises a polypropylene film. The polypropylene film contains a polypropylene resin.

The polypropylene resin is exemplified by homopolypropylene and propylene-α-olefin copolymer. These resins may be used alone, or in a combination of two or more kinds thereof.

The polypropylene resin contained in the polypropylene film may be any of fossil fuel-derived polypropylene resin, recycled polypropylene resin, or biomass-derived polypropylene resin. These polypropylene resins may be used alone, or in a combination of two or more kinds thereof.

The sealant layer 30A may further contain additives as necessary. The additive is exemplified by organic additives including antioxidants, stabilizers, lubricants such as calcium stearate, fatty acid amide or erucic acid amide, or antistatic agents; and particulate lubricants such as silica, zeolite, Syloid, hydrotalcite, or silicon particles.

The polypropylene film contained in the sealant layer 30A may be a stretched film or an unstretched film, among which preferred is unstretched film, from the viewpoint of lowering the melting point and making the heat sealing easier.

The thickness of the sealant layer 30A is not particularly limited, and may be, for example, 5 µm or more, 10 µm or more, 15 µm or more, 30 µm or more, or 50 µm or more. Furthermore, the thickness of the first base layer 20A may be 150 µm or less, 125 µm or less, 100 µm or less, or 80 µm or less. When the thickness of the sealant layer 30A is 5 µm or more, the packaging container such as packaging bag will be unlikely to break. When the thickness of the sealant layer 30A is 150 µm or less, the sealant layer 30A will keep good heat-sealability, and will be further less probable to cause sealing failure.

Note that sealant layer 5 may be used in place of the sealant layer 30A.

### (Laminate)

The oxygen permeability of the laminate 100A at 30°C and 70% RH is not particularly limited, but is preferably 200 cc/m²·day·atm or less.

In this case, the laminate 100A, used to manufacture the packaging container and to enclose contents therein to manufacture the packaging product, can effectively suppress the contents from degrading due to oxygen, as compared with the case where the oxygen permeability at 30°C and 70% RH exceeds 200 cc/m²·day·atm.

The oxygen permeability of the laminate 100A at 30°C and 70% RH is more preferably 100 cc/m²·day·atm or less, and particularly preferably 50 cc/m²·day·atm or less.

In the laminate 100A, the proportion of the polypropylene resin relative to the entire laminate 100A is not particularly limited, but is preferably 90% by mass or more. When the proportion of the polypropylene resin relative to the entire laminate 100A is 90% by mass or more, the laminate 100A will successfully have further enhanced recyclability.

The proportion of the polypropylene resin relative to the entire laminate 100A is more preferably 92% by mass or more, and particularly preferably 94% by mass or more.

The thickness of the laminate 100A is not particularly limited, but is preferably 200 µm or less. When the thickness of the laminate 100A is 200 µm or less, the heat-sealability during manufacture of the packaging container is less likely to decrease, the laminate 100A is less likely to curl, and it becomes easier to use as a packaging container. The thickness of the laminate 100A may be 40 µm or more, may be 80 µm or more, or may be 100 µm or more. When the thickness of the laminate 100A is 40 µm or more, the laminate 100A will be less likely to buckle, and will make bag-making with use of the laminate 100A easier, so that the bag after bag-making will be more easily self-supporting.

### <Method for Manufacturing Laminate>

Next, a method for manufacturing the laminate 100A will be described.

First, the second base layer 10A is prepared. As the second base layer 10A, used herein is a polypropylene film whose peak intensity ratio A (=I₁₁₀/I₀₄₀) in an X-ray diffraction pattern acquired by X-ray diffraction measurement is 0.75 or more. The peak intensity ratio A may be prepared, for example, by controlling the amount of a crystal nucleating agent to be blended in the raw material of the polypropylene film, or by controlling stretching conditions of the polypropylene film before stretching.

### Meanwhile, the barrier film 25 is prepared.

The process begins with preparing the first base layer 20A.

Next, the anchor coat layer 21 is formed on the first base layer 20A. The anchor coat layer 21 is obtainable by applying the anchor coat layer-forming composition onto the surface of the first base layer 20A, followed by drying.

Next, the vapor-deposited layer 22 as the inorganic oxide layer is formed on the anchor coat layer 21.

The vapor-deposited layer 22 may be formed by vacuum vapor deposition, sputtering, ion plating, plasma vapor deposition (CVD) or the like. Vacuum vapor deposition is most preferred in consideration of productivity. A heating system preferably used in vacuum vapor deposition may be any of an electron beam heating system, a resistance heating system, or an induction heating system, wherein use of an electron beam heating system is more preferred in consideration of the wide range of selectivity of materials for vapor deposition. The vapor deposition may also be performed using plasma-assisted deposition or ion beam-assisted deposition, aiming at improving adhesion between the vapor-deposited layer 22 and the first base layer 20A, and denseness of the vapor-deposited layer 22. The vapor deposition may yet alternatively rely upon reactive vapor deposition in which oxygen or other various gases is blown, for increased transparency of the vapor-deposited film.

When forming the anchor coat layer 21 and the first base layer 20A, the anchor coat layer 21 and the first base layer 20A, whose softening temperatures have been measured by local thermal analysis (LTA), are formed so that the softening temperature T1 of the first base layer 20A is lower than the softening temperature T2 of the anchor coat layer 21.

Next, the gas barrier layer 23 is formed on the vapor-deposited layer 22. The barrier film 25 is thus obtainable.

The gas barrier layer 23 is obtainable by applying the gas barrier layer-forming composition onto the vapor-deposited layer 22, followed by drying.

Method for application is exemplified by wet film forming methods such as gravure coating, dip coating, reverse coating, wire bar coating, and die coating.

Next, the second base layer 10A is formed on the gas barrier layer 23 of the barrier film 25, via the adhesive layer 40A.

On the other hand, the sealant layer 30A is formed on the first base layer 20A of the barrier film 25 via the adhesive layer 40A.

The laminate 100A is thus obtainable.

### <Packaging Product>

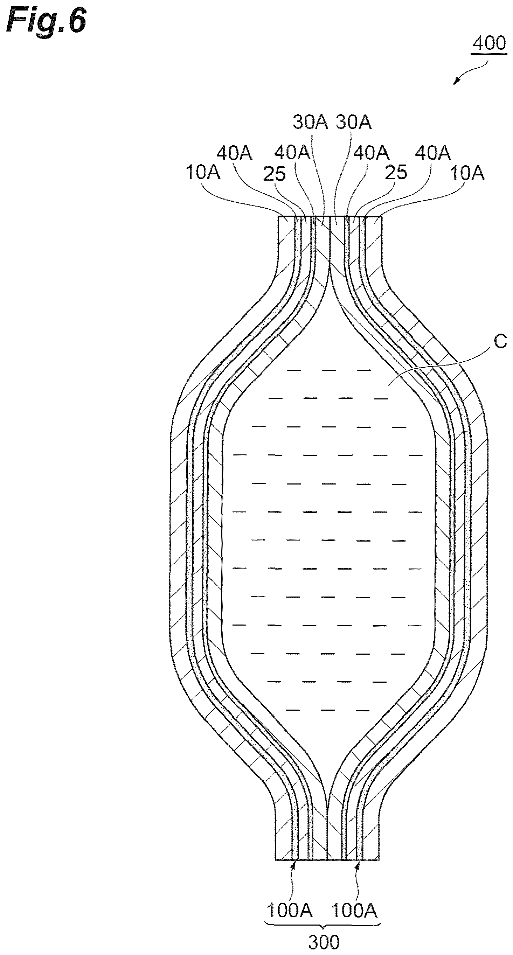

Next, a second embodiment of the packaging product of the present disclosure will be described, while referring to FIG. 6. FIG. 6 is a side elevation illustrating the second embodiment of the packaging product of the present disclosure. In FIG. 6, all identical components as those in FIG. 5 are denoted by the same reference signs, and will not be described repeatedly.

As illustrated in FIG. 6, packaging product 400 has packaging container 300, and contents C enclosed in the packaging container 300.

The packaging product 400 can be obtained by using a pair of laminates 100A, heat-sealing a part of the circumferences of the laminates 100A with the sealant layers 30A opposing, enclosing the contents C, and heat-sealing the remaining part of the circumferences of the laminates 100A. Also the packaging container 300 can be simultaneously obtained.

In the packaging product 400, the barrier film 25 can exhibit excellent lamination strength with the sealant layer 30A as another film even after heat sterilization treatment, so that the laminate will have excellent interlayer adhesion even after heat sterilization treatment, and delamination can be suppressed can be suppressed even after heat sterilization treatment.

Also since the packaging product includes the packaging container 300 obtained by using the laminate 100A; and since the laminate 100A has the second base layer 10A, the barrier film 25 and the sealant layer 30A arranged in this order, in which the base layer of the barrier film 25 is the first base layer 20A, each of the second base layer 10A, the first base layer 20A, and the sealant layer 30A contains a polypropylene film, and the peak strength ratio A is 0.75 or more, so that the laminate 100A will be highly recyclable, and will have more excellent interlayer adhesion even after heat sterilization treatment. This also successfully suppresses delamination in the laminate 100A, even after heat sterilization treatment. The packaging container 300, left after the contents C was taken out of the packaging product 400, will be highly recyclable.

Note that the packaging product 400 may also be obtained by folding a single laminate 100A so that the sealant layers 30A face each other, heat-sealing a part of three sides of the periphery of the laminate 100A, enclosing the contents C, and then heat-sealing the remaining portion of the periphery of the laminate 100A. Also the packaging container 300 can be simultaneously obtained.

The packaging container 300 is exemplified by a packaging bag, a laminate tube container, and a liquid paperboard container.

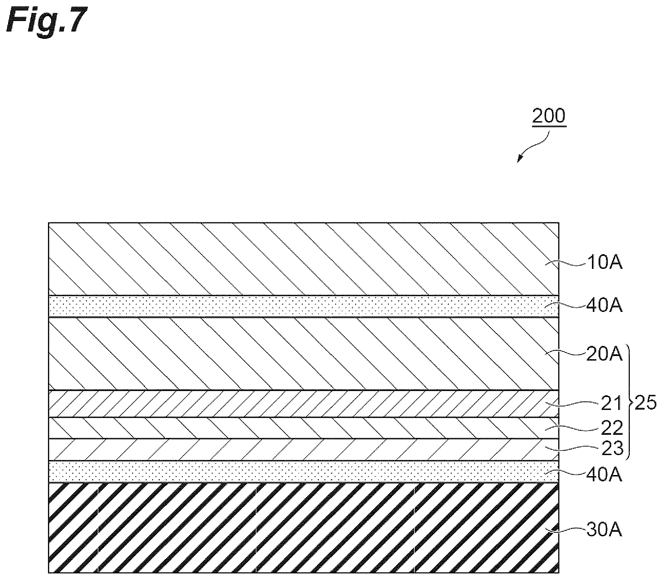

The laminate of the present disclosure is not limited to the aforementioned embodiments. For example, although the barrier film 25 in the third embodiment had the vapor-deposited layer 22 and the gas barrier layer 23 arranged between the second base layer 10A and the first base layer 20A, such vapor-deposited layer 22 and the gas barrier layer 23 may alternatively be arranged, as illustrated in a laminate 200 of a fourth embodiment illustrated in FIG. 7, between the sealant layer 30A and the first base layer 20A, rather than between the second base layer 10A and the first base layer 20A.

Also, the laminate 200 can have excellent recyclability and excellent interlayer adhesion even after heat sterilization treatment.

Note that the vapor-deposited layer 22 and the gas barrier layer 23 may be interposed between the second base layer 10A and first base layer 20A, and between the sealant layer 30A and first base layer 20A.

The barrier film 25, although having been illustrated to have the vapor-deposited layer 22 and the gas barrier layer 23 arranged in this order when viewed from first base layer 20A, may alternatively have the gas barrier layer 23 and vapor-deposited layer 22 arranged in this order when viewed from the first base layer 20A.

Note that the outline of the present disclosure is as follows.
[1] A barrier film including a base layer containing a polypropylene resin, an anchor coat layer, and an inorganic oxide layer arranged in this order, the base layer including a contact layer in contact with the anchor coat layer,
   wherein, when the softening temperatures of the anchor coat layer and the contact layer are measured by local thermal analysis, the softening temperature T1 of the contact layer is lower than the softening temperature T2 of the anchor coat layer.
[2] The barrier film according to [1], wherein the anchor coat layer has the softening temperature T2 in a range of 140°C or higher and 195°C or lower.
[3] The barrier film according to [1] or [2], wherein the base layer further includes a core layer adjoining to the contact layer, on a side opposite to the anchor coat layer, the contact layer is a skin layer, and
   the softening temperature T1 of the contact layer is lower than a softening temperature T3 of the core layer.
[4] The barrier film according to any one of [1] to [3], wherein T2 - T1 is equal to or less than 70°C.
[5] The barrier film according to any one of [1] to [4], wherein the contact layer contains a copolymer of propylene and an α-olefin.
[6] The barrier film according to any one of [1] to [5], wherein the anchor coat layer contains a polyurethane resin.
[7] The barrier film according to any one of [1] to [6], wherein the anchor coat layer has a thickness of 0.05 to 2 µm.
[8] A laminate including the barrier film according to any one of [1] to [7], and a sealant layer, wherein
   the sealant layer contains a polyolefin.
[9] The laminate according to [8], further including a second base layer on a surface of the barrier film, on a side opposite to the sealant layer, wherein the second base layer contains a polyolefin resin.
[10] The laminate according to [9], including the second base layer, the barrier film, and the sealant layer arranged in this order, wherein
   the base layer of the barrier film is a first base layer,
   each of the second base layer, the first base layer, and the sealant layer contains a polypropylene film, and
   in an X-ray diffraction pattern acquired by X-ray diffraction measurement for the second base layer, a peak intensity ratio A, which is a ratio of peak intensity I₁₁₀ of (110) plane to peak intensity I₀₄₀ of (040) plane, is 0.75 or more.
[11] The laminate according to [9] or [10], wherein the second base layer is an unstretched film, and the first base layer is a stretched film.
[12] The laminate according to [10] or [11], further including the inorganic oxide layer and a gas barrier layer arranged at least one of between the first base layer and the second base layer, and between the first base layer and the sealant layer.
[13] The laminate according to [12], further including the inorganic oxide layer and the gas barrier layer arranged between the first base layer and the second base layer.
[14] The laminate according to [12] or [13], wherein the inorganic oxide layer is a vapor-deposited layer, and the vapor-deposited layer contains at least one of aluminum oxide and silicon oxide.
[15] The laminate according to any one of [12] to [14], wherein
   the gas barrier layer is a layer formed from a coating liquid containing a silicon compound and a water-soluble polymer,
   the silicon compound contains at least one of a first silicon compound and a second silicon compound,
   the first silicon compound contains at least one of a silicon alkoxide represented by formula (1) below and a hydrolysate thereof, and
   the second silicon compound contains at least one of a silane coupling agent represented by formula (2) below and a hydrolysate thereof:

      Si(OR¹)₄ ··· (1)

      (in formula (1), OR¹ represents a hydrolyzable group),

      (R²Si(OR³)₃)ₙ ··· (2)

      (in formula (2), OR³ represents a hydrolyzable group, and R² represents a monovalent organic group, and n is an integer of 1 or more).
[16] The laminate according to any one of[10] to [15], having an oxygen permeability, at 30°C and 70% RH, of 200 cc/m²·day·atm or less.
[17] The laminate according to any one of [10] to [16], wherein
   the anchor coat layer contains an organic polymer, and
   the organic polymer contains at least one of polyacrylic resin, polyol-based resin, polyurethane-based resin, polyamide-based resin, or a reaction product of these resins.
[18] The laminate according to any one of [10] to [17], wherein the anchor coat layer has a thickness of 0.01 to 1 µm.
[19] A packaging container formed with use of the laminate according to any one of [8] to [18].
[20] A packaging product including: a packaging container; and contents enclosed in the packaging container,
   the packaging container being the packaging container according to [19].

### Examples

Hereinafter, the present disclosure will be specifically described while referring to Examples and Comparative Examples. The present disclosure is, however, by no means limited to these Examples.

### <Preparation of Anchor Coat Layer-Forming Compositions>

Anchor coat layer-forming compositions AC1, AC2, and AC3 were prepared as follows.

### (AC1)

Acrylic polyol and tolylene diisocyanate were mixed so as to equalize the number of OH groups of the acrylic polyol and the number of NCO groups of tolylene diisocyanate, and the mixture was diluted with ethyl acetate so as to adjust the solid content (total amount of acrylic polyol and the tolylene diisocyanate) to 5% by mass. To the diluted mixed solution, β-(3,4-epoxycyclohexyl)trimethoxysilane was further added so as to adjust the content thereof to 5 parts by mass, relative to 100 parts by mass in total of acrylic polyol and tolylene diisocyanate, followed by mixing of these components to prepare an anchor coat layer-forming composition AC1.

### (AC2)

An anchor coat layer-forming composition AC2 was prepared by mixing TAKELAC WPB-341 (from Mitsui Chemicals, Inc.) and isocyanate silane KBE-403 (from Shin-Etsu Chemical Co., Ltd.), so as to adjust the solid content ratio to 9:1.

### (AC3)

An anchor coat layer-forming composition AC3 (solid content: 2% by mass) was prepared by mixing Acridic CL-1000 (from DIC Corporation) as the acrylic polyol, and Coronate 2030 (from Tosoh Corporation), which is a curing agent of the tolylene diisocyanate (TDI) type, as the isocyanate-based compound, so as to adjust the solid content ratio to 6:4, with use of ethyl acetate as a diluent solvent.

### <Preparation of Coating Liquid>

Coating liquids as the gas barrier layer-forming composition for use in Examples and Comparative Examples were prepared as follows.

### (Coating Liquid 1)

Solution obtained by mixing the liquid A, the liquid B, and the liquid C shown below at a mixing ratio (ratio by mass) of 70/20/10.

Liquid A: A hydrolysate liquid (5% by mass solid content (SiO₂ equivalent)), obtained from a mixed solution of 17.9 g of tetraethoxysilane and 10 g of methanol, to which 72.1 g of 0.1N hydrochloric acid was added under stirring for 30 minutes for hydrolysis.

Liquid B: Polyvinyl alcohol solution in water/methanol (water:methanol = 95:5, in ratio by mass), polyvinyl alcohol content 5% by mass.

Liquid C: A hydrolysate liquid (5% by mass solid content (R²Si(OH)₃ equivalent), R² represents 3,4-epoxycyclohexyl group), obtained from a mixed solution of β-(3,4-epoxycyclohexyl)trimethoxysilane and isopropyl alcohol (solution in IPA), to which hydrochloric acid (1N) was gradually added under stirring for 30 minutes, for hydrolysis in a water/IPA solution (water/IPA = 1/1, in ratio by mass).

### (Coating Liquid 2)

Solution obtained by mixing liquid A, liquid B, and liquid C described below, at a mixing ratio (ratio by mass) of 45/45/10.

Liquid A: A liquid (5% by mass (SiO₂ equivalent) TEOS hydrolysate liquid), obtained by mixing tetraethoxysilane (trade name: KBE04, 100% by mass solid content, from Shin-Etsu Chemical Co., Ltd., hereinafter also referred to as "TEOS"), methanol (from Kanto Chemical Co., Inc.), and 0.1N hydrochloric acid (from Kanto Chemical Co., Inc.) at a ratio of 17/10/73 (ratio by mass), and by hydrolyzing TEOS.

Liquid B: A 5% by mass aqueous solution of polyvinyl alcohol (trade name: Kuraray Poval 60-98, from Kuraray Co., Ltd., also referred to as "PVA", hereinafter).

Liquid C: A hydrolysate liquid obtained by diluting 1,3,5-tris(3-methoxysilylpropyl)isocyanurate (Trade name: X-12-965P, from Shin-Etsu Chemical Co., Ltd.) as a silane coupling agent, with a water/IPA mixed solvent (1:1, ratio by mass), so as to adjust the solid content to 5% by mass (R²Si(OH)₃ equivalent).

### [Manufacture of Barrier Film]

### <Example 1>

An ethylene-1-butene-propylene random copolymer resin (ethylene content: 2.5 mol%, 1-butene content: 3.5 mol%, propylene content: 94.0 mol%) was used as a material of the skin layer, and a homopolypropylene resin was used as a material of the core layer. These resins were co-extruded and then biaxially stretched, to manufacture a quadrangular base film (base layer) having a total thickness of 20 µm.

Next, the anchor coat layer-forming composition AC1 was coated on the skin layer of the base layer by gravure coating, and the coating was dried in an oven at 100°C for 10 seconds, to form an anchor coat layer having a thickness of 0.12 µm.

Next, silicon oxide was vapor-deposited on the anchor coat layer, by a reactive vapor deposition based on radio frequency excited ion plating in an oxygen atmosphere under reduced pressure, thereby forming a vapor-deposited layer of inorganic oxide having a thickness of 30 nm.

Next, the coating liquid 1 was coated on the vapor-deposited layer by gravure coating, the coating was dried at 80°C for 20 seconds, to form a gas barrier layer having a thickness of 0.3 µm and the barrier film was manufactured.

### <Example 2>

A barrier film was manufactured in the same manner as in Example 1, except that a 1-butene-propylene random copolymer resin (1-butene content: 4.5 mol%, propylene content: 95.5 mol%) was used as a material of the skin layer.

### <Example 3>

A barrier film was manufactured in the same manner as in Example 1, except that the anchor coat layer-forming composition AC2 was coated on the skin layer of the base layer by gravure coating, and the coating was dried in an oven at 100°C for 10 seconds, to form an anchor coat layer having a thickness of 1.5 µm.

### <Example 4>

A barrier film was manufactured in the same manner as in Example 1, except that the anchor coat layer-forming composition AC1 was coated on the skin layer of the base layer by gravure coating, and the coating was dried in an oven at 40°C for 30 seconds, to form an anchor coat layer.

### <Comparative Example 1>

A barrier film was manufactured in the same manner as in Example 1, except that an ethylene-propylene block copolymer resin (ethylene content: 1 mol%, propylene content: 99 mol%) was used as a material of the skin layer.

### <Example 5>

A barrier film was manufactured in the same manner as in Example 1, except that an ethylene-propylene random copolymer resin (ethylene content: 2.5 mol%, propylene content: 97.5 mol%) was used as a material of the skin layer.

### <Example 6>

A barrier film was manufactured in the same manner as in Example 1, except that an ethylene-propylene random copolymer resin (ethylene content: 10 mol%, propylene content: 90 mol%) was used as the material of the skin layer.

### <Example 7>

A barrier film was manufactured in the same manner as in Example 1, except that, when forming the anchor coat layer on the skin layer of the base layer, the anchor coat layer-forming composition was dried in an oven at 120°C.

### <Example 8>

A barrier film was manufactured in the same manner as in Example 1, except that the anchor coat layer-forming composition AC2 was coated on the skin layer of the base layer by gravure coating, and the coating was dried in an oven at 120°C for 10 seconds, to form an anchor coat layer having a thickness of 1.5 µm.

### <Comparative Example 2>

A barrier film was manufactured in the same manner as in Example 1, except that the anchor coat layer-forming composition AC2 was coated on the skin layer of the base layer by gravure coating, and the coating was dried in an oven at 40°C for 30 seconds, to form an anchor coat layer having a thickness of 1.5 µm.

### [Manufacture of Laminate]

A 60 µm-thick unstretched polypropylene film was laminated to a face of the barrier film manufactured in each of Examples 1 to 8 and Comparative Examples 1 and 2, on the side the gas barrier layer is provided, by dry lamination with use of a two-component urethane-based adhesive in between, to manufacture a quadrangular laminate.

### [Retort Processing]

Two laminates each manufactured in Examples 1 to 8 and Comparative Examples 1 and 2 were prepared, the two laminates were superposed with the sealant layers facing each other, three sides out of four sides were heat-sealed to form a packaging bag, water as the contents was filled through the remaining unsealed side, and finally the remaining side was heat-sealed to obtain a packaging product. The packaging product was then subjected to retort sterilization at 130°C for 60 minutes.

### [Evaluation]

### <Measurement of Softening Temperature>

The softening temperatures of the skin layer of the base layer and the anchor coat layer were measured by the method described below.

Each packaging product was subjected to retort processing, and the laminate was cut out from the packaging bag from which water had been discharged, and both the top and back faces of the laminate were corona-treated at 0.20 kW. The corona treatment herein employed a corona treater (trade name: CT-0212) from Kasuga Denki, Inc.

After corona treatment on both the front and back surfaces of the laminate, the laminate was then cut with a razor into a strip having a base length of 1.0 mm and a height of 5.0 mm, to obtain a cut piece. The cut piece was embedded in a photocurable resin, and the photocurable resin was then cured under a halogen lamp (trade name: KTX-100R, from Kenko Tokina Corporation) to obtain a block piece. The photocurable resin used herein was D-800 (trade name) from Toagosei Co., Ltd. The photo-cured block piece was then fixed with an AFM sample holder insert, the cross section of the sample was cut with a glass knife using a cross section cutter at normal temperature (25°C), and the cross section was further cut at a cutting speed of 1.0 mm/s and a cutting thickness of 100 nm, using a diamond knife of the cross section cutter at low temperatures (-40°C). The cutting was terminated upon reaching a mirror-finished surface. A measurement sample having the laminate exposed in the cross section was thus obtained. The cross-section cutters employed herein were ultramicrotome EM UC7 (trade name) and a cryosystem EM FC7 (trade name) from Leica Corporation. The direction of cutting with the knives was aligned parallel to the interfaces of the adjoining layers, and perpendicular to the long side of the strip-shaped cut piece. The measurement sample was subjected to the measurement of softening temperature, while being fixed with the AFM sample holder insert.

The softening temperature and the cross section geometry of the measurement sample were measured using an atomic force microscope (AFM) (MFP-3D-SA, trade name, manufactured by Oxford Instruments), a local thermal analysis option (Ztherm System, trade name), and a cantilever (AN2-200, trade name, manufactured by Anasis Instruments) having a spring constant of 0.5 to 3.5 N/m. The softening temperature measurement was conducted at the center part in the thickness direction of the skin layer of the base layer and the anchor coat layer.

At this time, in setting the contact pressure of the cantilever (the amount of change in deflection of the cantilever), the amount of change in the deflection voltage was set to 0.2 V for the skin and core layers of the base layer, and 1.5 V for the anchor coat layer. The sample surface was then heated after Detrend correction, using a voltage application rate (heating rate) of 0.5 V/sec and a maximum applied voltage of 5.5 V. As a result, the sample surface expanded, and the cantilever position rose. Further heating of the sample surface softened the sample surface, and the position of the cantilever was lowered. The measurement was terminated upon a 10 nm descent of the cantilever. If the maximum applied voltage was reached without the Z displacement descending 10 nm from the change point, the measurement was performed again after increasing the maximum applied voltage by 0.5 V for both the detrend correction and the measurement.

The applied voltage at which the height in the vertical direction (Z displacement) of the cantilever became maximum was regarded as the applied voltage at the softened point, and the voltage value was read.

**In** order to calculate the softening temperature of the sample, a calibration curve was prepared according to each of the measurement conditions of the skin layer and the anchor coat layer of the base layer. Calibration samples used herein were cross section samples made of four types of polymer materials whose melting points (melting peak temperatures) have been measured in advance with a differential scanning calorimeter (DSC), and prepared in environments at temperatures not higher than the individual glass transition temperatures.
· Polycaprolactone pellet (melting point: 60°C)
· Low density polyethylene pellet (melting point: 112°C)
· Polypropylene pellet (melting point: 166°C)
· Biaxially oriented polyethylene terephthalate film (melting point: 255°C)

The cross section samples were manufactured with use of an ultramicrotome and a cryosystem, by which the cross sections were cut in an environment at -80°C for polycaprolactone, -140°C for low-density polyethylene, -40°C for polypropylene, and 25°C or room temperature for polyethylene terephthalate. Measurement conditions include a voltage application rate (temperature rise rate) of 0.5 V/sec; and a maximum applied voltage of 3.5 V for polycaprolactone, 5 V for low-density polyethylene, 6 V for polypropylene, and 7.8 V for polyethylene terephthalate. In setting the contact pressure of the cantilever (amount of change in deflection of the cantilever), the amount of change in the deflection voltage was set to 0.2 V in the calibration curve of the skin layer and the core layer of the base layer, and to 1.5 V in the calibration curve of the anchor coat layer, and the applied voltage at the softening point was measured by heating the sample surface after the detrend correction. The applied voltage values at the softened points were measured ten times at different measurement points for the individual calibration samples, and the average values of the applied voltage obtained from the softened points were plotted versus the melting points from the DSC measurement (melting peak temperatures), while being approximated by a cubic function based on the least squares method, thereby creating a calibration curve.

Temperatures that correspond to the applied voltages at the softening points of the skin layer of the base layer, and of the anchor coat layer were determined, with use of the calibration curve plotting the applied voltage versus temperature, and these temperatures were defined as softening temperatures T1 and T2. Also values of T2 - T1 were calculated. Results are shown in Table 1 or Table 2. Results are summarized in Table 1 or Table 2.

### <Gas Barrier Property>

The gas barrier property was evaluated based on the oxygen permeability. The laminate was cut out from the packaging bag obtained after removing water from the retort-processed packaging product, and for the thus obtained laminate, the oxygen permeability was measured. The measurement was conducted with use of an oxygen permeability measurement apparatus (OXTRAN 2/20, from Modern Control) under a condition with a temperature of 30°C and a relative humidity of 70%. The measurement method is in accordance with JIS K-7126, Method B (isobaric method), and ASTM D3985-81, wherein the measured values were denoted in unit [cm³ (STP)/m²/day/atm]. Results of oxygen permeability are shown in Table 1 or Table 2.

### <Lamination Strength>

A 1.5 cm × 10 cm laminate was cut out from the packaging bag obtained from the retort-processed packaging product from which water had been discharged, and the laminate was evaluated regarding the lamination strength between the barrier film and the sealant layer. The lamination strength was measured in accordance with JIS K6854, with a test width of 15 mm, a peeling rate of 300 mm/min, at a T-peel angle. Measured values were denoted in units [N/15 mm]. When the lamination strength was 2 N/15 mm or more, the barrier film was judged to have excellent lamination strength with the sealant layer. Results of the lamination strength are shown in Table 1 or Table 2.

**[Table 1]**

| | Skin layer | Anchor coat layer | | | T2 - T1 | Evaluation after retort processing | |
|---|---|---|---|---|---|---|---|
| | | | | | | Gas barrier property | Lamination strength |
| | Softening tem perature T1 | Compo sition | Thickness | Softening temperature T2 | | Oxygen permeability | |
| | °C | | µm | °C | °C | cm³/m²/day/atm | N/15 mm |
| Example 1 | 130 | A C 1 | 0.12 | 187 | 57 | 1.5 | 3.7 |
| Example 2 | 146 | A C 1 | 0.12 | 187 | 41 | 1.7 | 3.5 |
| Example 3 | 130 | A C 2 | 1.5 | 157 | 27 | 0.9 | 2.4 |
| Example 4 | 130 | A C 1 | 0.12 | 135 | 5 | 7.1 | 3.5 |
| Comparative Example 1 | 205 | A C 1 | 0.12 | 187 | -18 | 2.6 | 0.9 |

**[Table 2]**

| | Skin layer | Anchor coat layer | | | T2 - T1 | Evaluation after retort processing | |
|---|---|---|---|---|---|---|---|
| | | | | | | Gas barrier property | Lamination strength |
| | Softening tem perature T1 | Compo sition | Thickness | Softening temperature T2 | | Oxygen permeability | |
| | °C | | µm | °C | °C | cm³/m²/day/atm | N/15 mm |
| Example 5 | 165 | A C 1 | 0.12 | 187 | 22 | 1.5 | 3.5 |
| Example 6 | 120 | A C 1 | 0.12 | 187 | 67 | 1.9 | 3.3 |
| Example 7 | 130 | A C 1 | 0.12 | 195 | 65 | 1.2 | 3.5 |
| Example 8 | 130 | A C 2 | 1.5 | 165 | 35 | 0.8 | 2.6 |
| Comparative Example 2 | 130 | A C 2 | 1.5 | 130 | 0 | 5.2 | 1.0 |

### <Example 9>

First, as listed in Table 3, a 50 µm-thick quadrangular unstretched polypropylene (PP) film 1 was prepared as the second base layer. This PP film 1 was subjected to X-ray diffraction measurement as described below. As a result, a peak intensity ratio A (=I₁₁₀/I₀₄₀), which is the ratio of the peak intensity I₁₁₀ of the (110) plane to the peak intensity I₀₄₀ of the (040) plane was 1.03 as shown in Table 3. The PP film 1 herein had a three-layer structure, in which all the layers were formed of a polypropylene copolymer resin.

On the other hand, a 20 µm-thick biaxially stretched polypropylene film (trade name "ME-1", OPP, from Mitsui Chemicals Tohcello, Inc.; also referred to as "PP film 5", hereinafter) was prepared as the first base layer.

Next, the anchor coat layer-forming composition AC3 prepared as described above was applied to one surface of the first base layer by gravure coating, to form a coated film. The coated film was then allowed to pass through an oven at 100°C for 10 seconds for drying, thereby forming a 0.1 µm-thick anchor coat layer.

Next, a silicon oxide vapor-deposited layer was formed on the anchor coat layer, so as to have a thickness to 25 nm. In this process, the silicon oxide vapor-deposited layer was formed by evaporating silicon oxide by electron beam vacuum vapor deposition based on an electron beam heating system.

Next, the coating liquid 2, as the gas barrier layer-forming composition prepared as described above, was applied onto the silicon oxide vapor-deposited layer by gravure coating, to form a coated film. The coated film was then allowed to pass through an oven at 60°C for 60 seconds for drying, thereby forming a 0.3 µm-thick gas barrier layer.

A barrier film (first base layer/anchor coat layer/silicon oxide vapor-deposited layer/gas barrier layer) was obtained in this way.

The second base layer and the barrier film were then laminated by dry lamination, with the gas barrier layer of the barrier film facing the second base layer. In the dry lamination, an adhesive layer was formed by curing a two-liquid curing type adhesive ("A525/A52" from Mitsui Chemicals & SKC Polyurethanes Inc.). A second structure (first base layer/anchor coat layer/silicon oxide vapor-deposited layer/gas barrier layer/adhesive layer/second base layer) was obtained in this way.

Next, the second structure, and a 60 µm-thick unstretched polypropylene film (trade name: TORAYFAN ZK207, from Toray Industries, Inc.) as the sealant layer were laminated by dry lamination, with the first base layer of the second structure faced to the sealant layer. In the dry lamination, an adhesive layer was formed by curing, with use of a two-component adhesive ("A525/A52" from Mitsui Chemicals & SKC Polyurethanes Inc.).

A quadrangular laminate (sealant layer/adhesive layer/first base layer/anchor coat layer/silicon oxide vapor-deposited layer/gas barrier layer/adhesive layer/second base layer) was obtained in this way.

The proportion of polypropylene resin in the entire thus obtained laminate was 91% by mass.

### <Example 10>

A laminate (sealant layer/adhesive layer/first base layer/anchor coat layer/silicon oxide vapor-deposited layer/gas barrier layer/adhesive layer/second base layer) was manufactured in the same manner as in Example 9, except that a 30 µm-thick unstretched polypropylene (PP) film 2 was used as the second base layer, as listed in Table 3. For the PP film 2, X-ray diffraction measurement described later was performed. As a result, a peak intensity ratio A was 0.81, as shown in Table 3. The PP film 2 herein had a three-layer structure, in which all the layers were formed of a polypropylene copolymer resin.

The proportion of polypropylene resin in the entire thus obtained laminate was 92% by mass.

### <Example 11>

A 30 µm-thick unstretched polypropylene (PP) film 2 (I₁₁₀/I₀₄₀=0.81) was prepared as the second base layer, as listed in Table 3.

The second base layer, and a barrier film prepared in the same manner as in Example 9 were laminated by dry lamination, with the first base layer of the barrier film facing the second base layer. In the dry lamination method, an adhesive layer was formed by curing, with use of a two-liquid curing-type adhesive ("A525/A52" from Mitsui Chemicals & SKC Polyurethanes Inc.). A third structure (second base layer/adhesive layer/first base layer/anchor coat layer/silicon oxide vapor-deposited layer/gas barrier layer) was obtained in this way.

Next, the third structure, and a 60 µm-thick unstretched polypropylene film (trade name: TORAYFAN ZK207, from Toray Industries, Inc.) as the sealant layer were laminated by dry lamination, with the gas barrier layer of the third structure facing the sealant layer. In the dry lamination method, a two-liquid curing-type adhesive ("A525/A52" manufactured by Mitsui Chemicals & SKC Polyurethanes Inc.) was used, and an adhesive layer was formed by curing. A laminate (second base layer/adhesive layer/first base layer/anchor coat layer/silicon oxide vapor-deposited layer/gas barrier layer/adhesive layer/sealant layer) was obtained in this way.

The proportion of polypropylene resin in the entire thus obtained laminate was 91% by mass.

### <Example 12>

A laminate (sealant layer/adhesive layer/first base layer/anchor coat layer/silicon oxide vapor-deposited layer/gas barrier layer/adhesive layer/second base layer) was manufactured in the same manner as in Example 9, except that a 25 µm-thick stretched polypropylene (PP) film 3 was prepared as the second base layer, as listed in Table 3. For the PP film 3, X-ray diffraction measurement described later was performed. As a result, a peak intensity ratio A was 0.72, as summarized in Table 3. The PP film 3 had a three-layer structure, where the middle layer was formed of a homopolypropylene resin, and the outer layer and the inner layer were formed of a polypropylene copolymer resin. The inner layer is a layer on the side of the adhesive layer that bonds the gas barrier layer and the second base layer.

The proportion of polypropylene resin in the entire thus obtained laminate was 92% by mass.

### <Example 13>

A laminate (sealant layer/adhesive layer/first base layer/anchor coat layer/silicon oxide vapor-deposited layer/gas barrier layer/adhesive layer/second base layer) was manufactured in the same manner as in Example 9, except that a 25 µm-thick stretched polypropylene (PP) film 4 was prepared as the second base layer, as listed in Table 3. For the PP film 4, X-ray diffraction measurement described later was performed. As a result, a peak intensity ratio A was 0.48, as shown in Table 3. The PP film 4 had a three-layer structure, where the outer layer and the middle layer were formed of a homopolypropylene resin, and the inner layer was formed of a polypropylene copolymer resin.

The proportion of polypropylene resin in the entire thus obtained laminate was 91% by mass.

### <Example 14>

A 30 µm-thick unstretched polypropylene (PP) film 2 (I₁₁₀/I₀₄₀=0.81) was prepared as the second base layer, as listed in Table 3.

On the other hand, a 20 µm-thick biaxially stretched polypropylene film (also referred to as "PP film 6", hereinafter) was prepared as the first base layer. This biaxially stretched polypropylene film was composed of a core layer formed of homopolypropylene, and a skin layer composed of an ethylene-1-butene-propylene random copolymer resin (ethylene content: 2.5 mol%, 1-butene content: 3.5 mol%, propylene content: 94.0 mol%).

Next, the anchor coat layer-forming composition AC1 prepared as described above was applied onto one surface of the skin layer of the first base layer by gravure coating, to form a coated film. The coated film was then allowed to pass through an oven at 100°C for 10 seconds for drying, thereby forming a 0.12 µm-thick anchor coat layer.

Next, a silicon oxide vapor-deposited layer was formed on the anchor coat layer, so that the thickness would be 30 nm. In this process, the silicon oxide vapor-deposited layer was formed by evaporating silicon oxide by electron beam vacuum vapor deposition based on an electron beam heating system.

Next, the coating liquid 1, as the gas barrier layer-forming composition prepared as described above, was applied onto the silicon oxide vapor-deposited layer by gravure coating, to form a coated film. The coated film was then allowed to pass through an oven at 80°C for 20 seconds for drying, thereby forming a 0.3 µm-thick gas barrier layer.

A barrier film (first base layer/anchor coat layer/silicon oxide vapor-deposited layer/gas barrier layer) was obtained in this way.

The second base layer and the barrier film were then laminated by dry lamination method, with the first base layer of the barrier film facing the second base layer. In the dry lamination method, an adhesive layer was formed by using and curing a two-liquid curing-type adhesive ("A525/A52" from Mitsui Chemicals & SKC Polyurethanes Inc.). A third structure (second base layer/adhesive layer/first base layer/anchor coat layer/silicon oxide vapor-deposited layer/gas barrier layer) was obtained in this way.

Next, the third structure, and a 60 µm-thick unstretched polypropylene film (trade name: TORAYFAN ZK207, from Toray Industries, Inc.) as the sealant layer were laminated by dry lamination, with the gas barrier layer of the third structure facing the sealant layer. In the dry lamination, an adhesive layer was formed by curing, with use of a two-liquid curing-type adhesive ("A525/A52" from Mitsui Chemicals & SKC Polyurethanes Inc.). A laminate (second base layer/adhesive layer/first base layer/anchor coat layer/silicon oxide vapor-deposited layer/gas barrier layer/adhesive layer/sealant layer) was obtained in this way.

### <Example 15>

A 30 µm-thick unstretched polypropylene (PP) film 2 (I₁₁₀/I₀₄₀=0.81) was prepared as the second base layer, as listed in Table 3.

On the other hand, a 20 µm-thick biaxially stretched polypropylene film (also referred to as "PP film 7", hereinafter) was prepared as the first base layer. This biaxially stretched polypropylene film was structured so that a core layer formed of homopolypropylene was interposed between two skin layers formed of an ethylene-1-butene-propylene random copolymer resin (ethylene content: 2.5 mol%, 1-butene content: 3.5 mol%, propylene content: 94.0 mol%).

Next, the anchor coat layer-forming composition AC1 prepared as described above was applied onto one surface of the skin layer of the first base layer by gravure coating, to form a coated film. The coated film was then allowed to pass through an oven at 100°C for 10 seconds for drying, thereby forming a 0.12 µm-thick anchor coat layer.

Next, a silicon oxide vapor-deposited layer was formed on the anchor coat layer, so as to have the thickness to 30 nm. In this process, the silicon oxide vapor-deposited layer was formed by evaporating silicon oxide by electron beam vacuum vapor deposition based on an electron beam heating system.

Next, the coating liquid 1, as the gas barrier layer-forming composition prepared as described above, was applied onto the silicon oxide vapor-deposited layer by gravure coating, to form a coated film. The coated film was then allowed to pass through an oven at 80°C for 20 seconds for drying, thereby forming a 0.3 µm-thick gas barrier layer.

A barrier film (first base layer/anchor coat layer/silicon oxide vapor-deposited layer/gas barrier layer) was obtained in this way.

The second base layer and the barrier film were then laminated by dry lamination, with the gas barrier layer of the barrier film facing the second base layer. In the dry lamination method, an adhesive layer was formed by curing a two-liquid curing-type adhesive ("A525/A52" from Mitsui Chemicals & SKC Polyurethanes Inc.). A second structure (second base layer/adhesive layer/gas barrier layer/silicon oxide vapor-deposited layer/anchor coat layer/first base layer) was obtained in this way.

Next, the second structure, and a 60 µm-thick unstretched polypropylene film (trade name: TORAYFAN ZK207, from Toray Industries, Inc.) as the sealant layer were laminated by dry lamination, with the first base layer of the second structure faced to the sealant layer. In the dry lamination method, an adhesive layer was formed by curing, with use of a two-liquid curing-type adhesive ("A525/A52" from Mitsui Chemicals & SKC Polyurethanes Inc.). A laminate (second base layer/adhesive layer/gas barrier layer/silicon oxide vapor-deposited layer/anchor coat layer/first base layer/adhesive layer/sealant layer) was obtained in this way.

A laminate (sealant layer/adhesive layer/first base layer/anchor coat layer/silicon oxide vapor-deposited layer/gas barrier layer/adhesive layer/second base layer) was obtained in this way.

### <Example 16>

A laminate (sealant layer/adhesive layer/gas barrier layer/silicon oxide vapor-deposited layer/anchor coat layer/first base layer/adhesive layer/second base layer) was manufactured in the same manner as in Example 14, except that a solvent-free adhesive was used as the adhesive that bonds the second base layer and the first base layer, and as an adhesive that bonds the gas barrier layer and the sealant layer. For the PP film 2, X-ray diffraction measurement described later was performed. As a result, a peak intensity ratio A was 0.48, as summarized in Table 3.

### [Peak Intensity Ratio A]

The peak intensity ratio A of the PP films 1 to 4, which are the second base layers used in Examples 9 to 16 was determined by X-ray diffraction measurement. More specifically, the peak intensity ratio A was determined as follows.

First, an X-ray diffraction pattern of the second base layer was obtained by out-of-plane measurement with use of a wide-angle X-ray diffractometer (Model ATX_G, from Rigaku Corporation) with the X-ray incident angle fixed to 0.5°, under 2θ/θ scanning over a range of diffraction angle from 10° to 30°. The X-ray used herein was CuKα, a characteristic X-ray, and the optical system was a slit collimation optical system. The X-ray was allowed to pass through an incident slit having a 0.1 mm × 10 mm opening, and to be incident on the surface of the second base layer. The diffracted X-ray was allowed to pass through a Soller slit serving as a receiving slit, and detected by a detector.

From an acquired X-ray diffraction pattern, the peak intensity of (110) plane at 2θ = 14°, and the peak intensity of the (040) plane at 2θ = 17° were determined, and the peak intensity ratio A was calculated from these peak intensities.

### [Retort Processing]

Two laminates manufactured in each of Examples 9 to 16 were prepared, the two laminates were superposed with the sealant layers facing each other, three out of four sides were heat-sealed to form a packaging bag, water as the contents was filled through the remaining side, and finally, by heat-sealing the remaining side, a packaging product was obtained. The packaging product was then subjected to retort processing at 120°C for 30 minutes.

### [Evaluation]

### <Measurement of Softening Temperature>

The softening temperature T1 of the first base layer, and the softening temperature T2 of the anchor coat layer were measured in the same manner as in Example 1. Also values of T2 - T1 were calculated. Results are summarized in Table 3.

### <Interlayer Adhesion of Laminate>

A 1.5 cm × 10 cm laminate was cut out from the packaging bag obtained from the retort-processed packaging product from which water had been discharged, and the laminate was evaluated regarding the lamination strength between the second base layer and the first base layer, the lamination strength between the first base layer and the sealant layer, that is, the interlayer adhesion of the laminate. The lamination strength was measured in accordance with JIS K6854, with a test width of 15 mm, a peeling rate of 300 mm/min, at a T-peel angle. Measured values were denoted in units [N/15 mm]. If the lamination strength was found to be 2 N/15 mm or more, the barrier film was judged to excel in the lamination strength with the sealant layer or with the second base layer, and thus the laminate was judged to excel in the interlayer adhesion. Results of interlayer adhesion are summarized in Table 4.

**[Table 3]**

| | Second base layer | | First base layer | | Anchor coat layer | | | Gas barrier layer | T2- T1 |
|---|---|---|---|---|---|---|---|---|---|
| | Type | Peak intensity ratio A (= I₁₁₀/I₀₄₀) | Type | Sotening temperature T1 | Composition | Thickness | Sotening temperature T2 | Type | |
| | | | | °C | | *µ*m | °C | | °C |
| Example 9 | PP film 1 | 1.03 | PP film 5 | 138 | A C 3 | 0.1 | 175 | Coating liquid 2 | 37 |
| Example 10 | PP film 2 | 0.81 | PP film 5 | 138 | A C 3 | 0.1 | 175 | Coating liquid 2 | 37 |
| Example 11 | PP film 2 | 0.81 | PP film 5 | 138 | A C 3 | 0.1 | 175 | Coating liquid 2 | 37 |
| Example 12 | PP film 3 | 0.72 | PP film 5 | 138 | A C 3 | 0.1 | 175 | Coating liquid 2 | 37 |
| Example 13 | PP film 4 | 0.48 | PP film 5 | 138 | A C 3 | 0.1 | 175 | Coating liquid 2 | 37 |
| Example 14 | PP film 2 | 0.81 | PP film 6 | 130 | A C 1 | 0.12 | 187 | Coating liquid 1 | 57 |
| Example 15 | PP film 2 | 0.81 | PP film 7 | 130 | A C 1 | 0.12 | 187 | Coating liquid 1 | 57 |
| Example 16 | PP film 2 | 0.81 | PP film 6 | 130 | A C 1 | 0.12 | 187 | Coating liquid 1 | 57 |

**[Table 4]**

| | Position of vapor-deposited layer + gas barrier layer | Evaluation after retort processing | |
|---|---|---|---|
| | | Interlayer adhesion | |
| | | Between 1st base layer/2nd base layer | Between 1st base layer/sealant layer |
| | | [N/15mm] | [N/15mm] |
| Example 9 | Between 1st base layer/2nd base layer | 3.7 | 2.4 |
| Example 10 | Between 1st base layer/2nd base layer | 3.6 | 2.4 |
| Example 11 | Between 1st base layer/sealant layer | 2.8 | 2.8 |
| Example 12 | Between 1st base layer/2nd base layer | 2.2 | 2.1 |
| Example 13 | Between 1st base layer/2nd base layer | 2.1 | 2.3 |
| Example 14 | Between 1st base layer/sealant layer | 3.1 | 3.1 |
| Example 15 | Between 1st base layer/2nd base layer | 3.8 | 2.5 |
| Example 16 | Between 1st base layer/sealant layer | 2.9 | 2.8 |

From the results summarized in Tables 1 to 3, the packaging products of Examples 1 to 16 were found to have greater lamination strength after the retort processing, as compared with the packaging product of Example 12 or 13.

Furthermore, the laminates of Examples 9 to 13 had a high polypropylene resin content, accounting for 90% by mass or more of the entire laminate.

Judging from the above, the barrier films of the present disclosure were confirmed to have excellent lamination strength with another film, even after heat sterilization treatment.

Also the laminates of the present disclosure were confirmed to excel in recyclability and interlayer adhesion even after heat sterilization.

### Industrial Applicability

The barrier film according to the present disclosure exhibits excellent lamination strength with another film such as the sealant layer, even after heat sterilization treatment such as boiling or retort processing, and is therefore useful as a laminate for packaging container.

### Reference Signs List

- 1: base layer (first base layer)
- 2: anchor coat layer
- 3: inorganic oxide layer
- 4: gas barrier layer
- 5: sealant layer (separate film)
- 10: barrier film
- 11: skin layer (contact layer)
- 12: core layer
- 20, 30: laminate
- 31: second base layer
- 40: packaging bag (packaging container)
- 100: packaging product
- 10A: second base layer
- 20A: first base layer
- 21: anchor coat layer
- 22: vapor-deposited layer
- 23: gas barrier layer
- 25: first structure (barrier film)
- 30A: sealant layer
- 40A: adhesive layer
- 100A, 200: laminate
- 300: packaging container
- 400: packaging product
- C: contents

## Claims

1. A barrier film comprising a base layer containing a polypropylene resin, an anchor coat layer, and an inorganic oxide layer, in this order, the base layer having a contact layer in contact with the anchor coat layer,
wherein, when softening temperatures of the anchor coat layer and the contact layer are measured by local thermal analysis, a softening temperature T1 of the contact layer is lower than a softening temperature T2 of the anchor coat layer.

2. The barrier film according to claim 1, wherein the anchor coat layer has the softening temperature T2 in a range of 140°C or higher and 195°C or lower.

3. The barrier film according to claim 1, wherein
the base layer further includes a core layer adjacent to the contact layer, on a side opposite to the anchor coat layer, the contact layer is a skin layer, and
the softening temperature T1 of the contact layer is lower than a softening temperature T3 of the core layer.

4. The barrier film according to claim 1 or 2, wherein T2 - T1 is equal to or less than 70°C.

5. The barrier film according to claim 1 or 2, wherein the contact layer contains a copolymer of propylene and an α-olefin.

6. The barrier film according to claim 1 or 2, wherein the anchor coat layer contains a polyurethane resin.

7. The barrier film according to claim 1 or 2, wherein the anchor coat layer has a thickness of 0.05 to 2 µm.

8. A laminate comprising the barrier film according to claim 1 or 2, and a sealant layer.

9. The laminate according to claim 8, further comprising a second base layer on a surface of the barrier film, on a side opposite to the sealant layer, wherein the second base layer contains a polyolefin resin.

10. The laminate according to claim 9, comprising the second base layer, the barrier film, and the sealant layer, in this order, wherein
the base layer of the barrier film is a first base layer,
each of the second base layer, the first base layer, and the sealant layer contains a polypropylene film, and
in an X-ray diffraction pattern acquired by X-ray diffraction measurement, a peak intensity ratio A, which is a ratio of peak intensity I₁₁₀ of (110) plane to peak intensity I₀₄₀ of (040) plane is 0.75 or more.

11. The laminate according to claim 10, wherein the second base layer is an unstretched film, and the first base layer is a stretched film.

12. The laminate according to claim 10, further comprising the inorganic oxide layer and a gas barrier layer at least one of between the first base layer and the second base layer, and between the first base layer and the sealant layer.

13. The laminate according to claim 12, further comprising the inorganic oxide layer and the gas barrier layer arranged between the first base layer and the second base layer.

14. The laminate according to claim 13, wherein the inorganic oxide layer is a vapor-deposited layer, and the vapor-deposited layer contains at least one of aluminum oxide and silicon oxide.

15. The laminate according to claim 12, wherein
the gas barrier layer is a layer formed from a coating liquid containing a silicon compound and a water-soluble polymer,
the silicon compound contains at least one of a first silicon compound and a second silicon compound,
the first silicon compound contains at least one of a silicon alkoxide represented by formula (1) below and a hydrolysate thereof, and
the second silicon compound contains at least one of a silane coupling agent represented by formula (2) below and a hydrolysate thereof:
Si(OR¹)₄ ··· (1)
(in formula (1), OR¹ represents a hydrolyzable group),
(R²Si(OR³)₃)ₙ ··· (2)
(in formula (2), OR³ represents a hydrolyzable group, R² represents a monovalent organic group, and n is an integer of 1 or more).

16. The laminate according to claim 15, having an oxygen permeability, at 30°C and 70% RH, of 200 cc/m²·day·atm or less.

17. The laminate according to claim 10, wherein
the anchor coat layer contains an organic polymer, and
the organic polymer contains at least one of polyacrylic resin, polyol-based resin, polyurethane-based resin, polyamide-based resin, or a reaction product of these resins.

18. The laminate according to claim 17, wherein the anchor coat layer has a thickness of 0.01 to 1 µm.

19. A packaging container formed with use of the laminate according to claim 8.

20. A packaging product comprising:
a packaging container; and
contents enclosed in the packaging container,
the packaging container being the packaging container according to claim 19.
